(19) Europäisches Patentamt
European Patent Office
Office européen des brevets

(11) **EP 1 619 605 B1**

(12) **EUROPEAN PATENT SPECIFICATION**

(45) Date of publication and mention
of the grant of the patent:
**23.11.2011 Bulletin 2011/47**

(51) Int Cl.:
**G06K 9/20** (2006.01)

(21) Application number: **04728271.0**

(22) Date of filing: **19.04.2004**

(86) International application number:
**PCT/JP2004/005582**

(87) International publication number:
**WO 2004/097721 (11.11.2004 Gazette 2004/46)**

(54) **Image processing device, image processing method, image processing program, and computer-readable recording medium containing the program for dealing with inverted characters**

Bildverarbeitungseinrichtung, Bildverarbeitungsverfahren, Bildverarbeitungsprogramm und das Programm enthaltendes computerlesbares Aufzeichnungsmedium zum Behandeln invertierter Buchstaben

Dispositiv de traitement d'image, procede de traitement d'image, programme traitement d'image et support d'enregistrement lisible par ordinateur contenant le programme pour le traitement des charactères inversée

(84) Designated Contracting States:
**DE FR GB**

(30) Priority: **25.04.2003 JP 2003122089**

(43) Date of publication of application:
**25.01.2006 Bulletin 2006/04**

(73) Proprietor: **Sharp Kabushiki Kaisha**
**Osaka-shi, Osaka 545-8522 (JP)**

(72) Inventors:
• **HIROSE, Hitoshi**
**Higashiosaka-shi,**
**Osaka 5798003 (JP)**
• **SUZUKI, Satoshi**
**Nara-shi, Nara 6310801 (JP)**

• **TAKEHARA, Kazuhiro**
**Nara-shi, Nara 6308453 (JP)**
• **HAKARIDANI, Mitsuhiro**
**Ikoma-shi, Nara 6300253 (JP)**

(74) Representative: **Brown, Kenneth Richard et al**
**R.G.C. Jenkins & Co**
**26 Caxton Street**
**London SW1H 0RJ (GB)**

(56) References cited:
JP-A- 1 279 385  JP-A- 5 174 178
JP-A- 7 065 125  JP-A- 8 249 421
JP-A- 9 114 925  JP-A- 9 269 970
JP-A- 60 073 793  JP-A- 2000 163 512
JP-A- 2002 279 345  US-A- 5 113 266
US-A- 5 778 103

**Description**

Image Processing Device, Image Processing Method, Image Processing Program, and Computer Readable Recording Medium Having the Program Recorded Thereon

Technical Field

The present invention relates to an image processing device, an image processing program, an image processing method, and a computer readable recording medium having the program recorded thereon, and more specifically to an image processing device, an image processing program, an image processing method, and a computer readable recording medium having the image processing program recorded thereon for recognizing a character included in an input image.

Background Art

Conventionally, Optical Character Readers (OCR) are known which optically read an image such as characters or handwritten characters formed on a recording medium including paper and the like and convert the image to character data. The image read by OCR includes not only characters but also photos, graphics, handwritten notes and the like, and the images formed on the surface of paper vary widely in state. Characters, for example, include reversed characters, design characters, and the like, and there are a wide variety of representations of character portions, which are difficult to recognize accurately. Among those characters, reversed characters are frequently used as a representation for calling attention. The U. S. Patent Publication 5778103 discloses a OCR method wherein run length compressed images can be analyzed and corrected directly for improved OCR performance; inverse type characters are detected and converted to normal type. Another technique for detecting such a reversed character is described, for example, in the Japanese Patent Publication No. 1279385. In the aforementioned publication, a portion of an input image is designated, and it is determined for the designated designation region whether one of the two values is assumed as a background or the other is assumed as a background according to the proportion of the binary pixels.

In the technique described in Patent Publication No. 2743378, however, the determination of whether to be reversed is performed on a designation region designated by the user, so that the user needs to designate a region, which inevitably makes the operation complicated.

In addition, the determination of whether to be reversed is preformed according to the proportion of the binary pixels of black and white, causing the following problems.

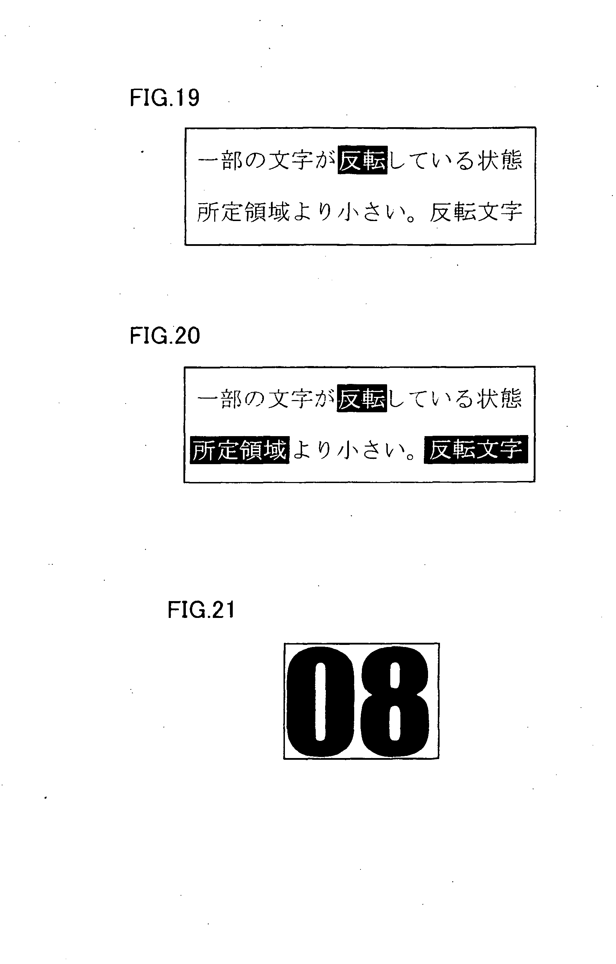

(1) A determination result differs depending on the number of reversed characters included in a designation region. Figs. 19 and 20 are diagrams showing exemplary designation regions. Referring to Fig. 19, the designation region includes a plurality of Chinese characters and Japanese characters in which the following two Chinese characters are represented as a reversed image. 反転 In this case, the pixels of the background for the characters represented as a reversed image are a few in number with respect to the pixels of the entire designation region. Referring to Fig. 20, the designation region includes a plurality of Chinese characters and Japanese characters in which the following Chinese characters are represented as reversed images. 反転 所定領域 反転文字 In this case, the pixels of the background for the characters represented as reversed images (reversed characters) are large in number with respect to the pixels of the entire designation region, when compared with the designation region shown in Fig. 19.

If a threshold value for the determination of whether to be reversed is high, it is possible to determine that the designation region shown in Fig. 20 is reversed. It is impossible, however, to determine that the designation region shown in Fig. 19 is reversed. In response, if the threshold is decreased to such a value that enables a determination that the designation region in Fig. 19 is reversed, it may be determined erroneously that even a designation region not including a reversed character is reversed.

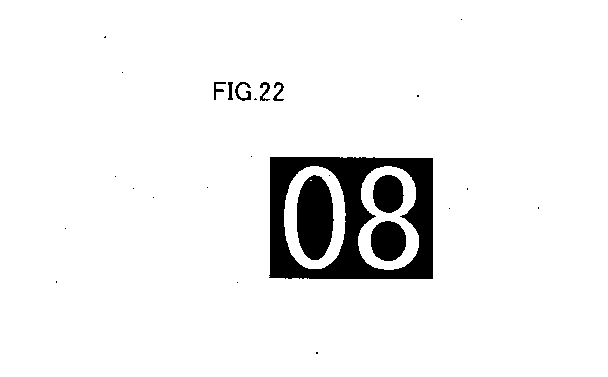

(2) A determination result differs depending on a typeface of a character. Figs. 21 and 22 are diagrams showing exemplary designation regions. Referring to Fig. 21, numbers "08" are expressed in black in a bold typeface in the designation region. In the designation region, 95% of the pixels are black pixels. Referring to Fig. 22, a character "0" is represented in a reversed character in a normal typeface in the designation region. In the designation region, 90% of the pixels are black pixels. While the designation region of Fig. 21 does not include a reversed character, the designation region of Fig. 22 includes a reversed character. If the threshold value for determining whether to be reversed is set at 90%, the designation region shown in Fig. 21 is determined as being reversed although it is not reversed. In response, if the threshold value is set to 95%, the designation region shown in Fig. 22 is determined as not being reversed although it is reversed. Furthermore, if the threshold value is set to 85%, the designation region shown in Fig. 21 is determined as being reversed although it is not reversed.

Disclosure of the Invention

The present invention is made to solve the aforementioned problems, and an object of the present invention is to provide an image processing device, an image processing program, an image processing method, and a computer readable recording medium having the image processing program recorded thereon in which a reversed character can be accurately detected from an input image.

In order to solve the aforementioned problems, in accordance with an aspect of the present invention, an image processing device performing a reversed image determination on a determination region is provided as set out in claim 1.

Preferably, the reversed image determination means measures a run length with respect to the line direction for the prescribed image information and obtains a ratio between the run length and a length of the prescribed image information corresponding to the line direction to determine whether or not a reversed image is formed based on whether lines containing ratios satisfying a minimum value form a block of adjacent lines.

Preferably the image processing device further includes: determination region extraction means for defining a partial region of a prescribed size for image information based on a size of the image information and extracting a determination region based on the partial region; wherein the reversed image determination means determines whether the determination region extracted by the determination region extraction means has an image in which a character having a gray level higher than at least that of a background is drawn or an image in which a character having a gray level lower than at least that of a background is drawn.

Preferably, the determination region extraction means resets a region including a region in a prescribed shape based on the partial region of a prescribed size and outputs the region as a determination region.

Preferably, the determination region extraction means extracts a strip-like region based on the partial region of a prescribed size and outputs the region as a determination region.

Preferably, the determination region extraction means obtains a histogram of a number of pixels each having an edge value of at least a prescribed value with respect to the line direction for the partial region of a prescribed size and scans the histogram from a middle of the partial region to a + direction and to a - direction orthogonal to the line direction to extract as a determination region a region in which a variation in the histogram satisfies a prescribed condition.

Preferably, the determination region extraction means obtains a run length with respect to the line direction for the partial region of a prescribed size and scans the run length from a middle portion of the partial region to a + direction and to a - direction orthogonal to the line direction to extract as a determination region a region in which a variation in the run length satisfies a prescribed condition.

Preferably, the reversed image determination means determines whether or not a reversed image is formed based on run lengths for the image information in the determination region.

In accordance with a further aspect of the present invention, a computer readable recording medium having an image processing program recorded thereon is provided as set out in claim 23.

In accordance with a still further aspect of the present invention, an image processing method is provided as set out in claim 24.

In accordance with yet another aspect of the present invention, an image processing program is provided as set out in claim 25.

In accordance with the present invention, whether or not a reversed image is formed is determined by defining a partial region of a prescribed size for an image input from image inputting means and extracting a determination region for determining whether or not an image is reversed based on the partial region. Therefore, image reversal can be performed only on a region requiring reversal processing. In addition, since the size of the determination region is set automatically, determination of a reversed image and image reversal processing can be performed irrespective of the size of the region having an image reversed.

Furthermore, extraction of a determination region for determining image reversal is repeated for the entire input image, so that image reversal in a reversed region can be performed even when there are a plurality of reversed regions of various sizes. Therefore, accurate character recognition can easily be performed.

In addition, since a run length is used for a reversed image determination, a process of determining a reversed image can be performed correctly even when characters occupy the major part of the determination region. Therefore, accurate character recognition can be performed even on characters of various sizes.

Here, a run length refers to a length having pixels of the same gray level being continuous where image information is measured in one direction.

Brief Description of the Drawings

Fig. 1 is a diagram showing an entire configuration of an image processing device in accordance with an embodiment of the present invention.

Fig. 2 is a functional block diagram showing a detailed function of a character recognition processing unit.

Fig. 3 is a flowchart showing a flow of a process executed in the image processing device in accordance with the embodiment of the present invention.

Fig. 4 is a diagram showing an exemplary image obtained by reading an image using a scanner.

Fig. 5 is a diagram illustrating an exemplary row region extraction process.

Fig. 6 is a diagram illustrating an exemplary character region extraction process.

Figs. 7A and 7B are diagrams showing exemplary character regions.

Figs. 8A and 8B are diagrams showing an exemplary edge image of a partial region and a histogram thereof.

Fig. 9 is a flowchart showing a flow of a determination region extraction process executed in the image processing device in accordance with the embodiment of the present invention.

Figs. 10A and 10B are diagrams illustrating a black run.

Figs. 11A and 11B are diagrams showing an exemplary histogram of black runs.

Fig. 12 is a flowchart showing a flow of a modified determination region extraction process.

Fig. 13 is a flowchart showing a flow of a reversed image determination process executed in the image processing device in accordance with the embodiment of the present invention.

Figs. 14A, 14B, and 14C are diagrams showing respective exemplary histograms of white runs and black runs.

Fig. 15 is a flowchart showing a flow of a first modification to the reversed image determination process executed in the image processing device in accordance with the embodiment of the present invention.

Fig. 16 is a flowchart showing a flow of a second modification to the reversed image determination process executed in the image processing device in accordance with an example.

Figs. 17A, 17B, and 17C are diagrams showing exemplary histograms of black pixels and white pixels.

Fig. 18 is a flowchart showing a flow of a third modification to the reversed image determination process executed in the image processing device in accordance with an example.

Fig. 19 is a diagram showing an exemplary image in which a portion of a designation region is reversed.

Fig. 20 is a diagram showing an exemplary image in which a plurality of portions in a designation region are reversed.

Fig. 21 is a diagram showing an exemplary designation region including a non-reversed image of a character in a bold typeface.

Fig. 22 is a diagram showing an exemplary designation region including a non-reversed image of a normal typeface.

Best Modes for Carrying Out the Invention

In the following, the embodiment of the present invention will be described with reference to the figures. In the following description, the same components are denoted with the same reference characters. The designations and functions thereof are also the same. Therefore, the detailed description thereof will not be repeated. It is noted that the embodiment described in the following is shown only by way of example to carry out the present invention and not by way of limitation in realizing the present invention.

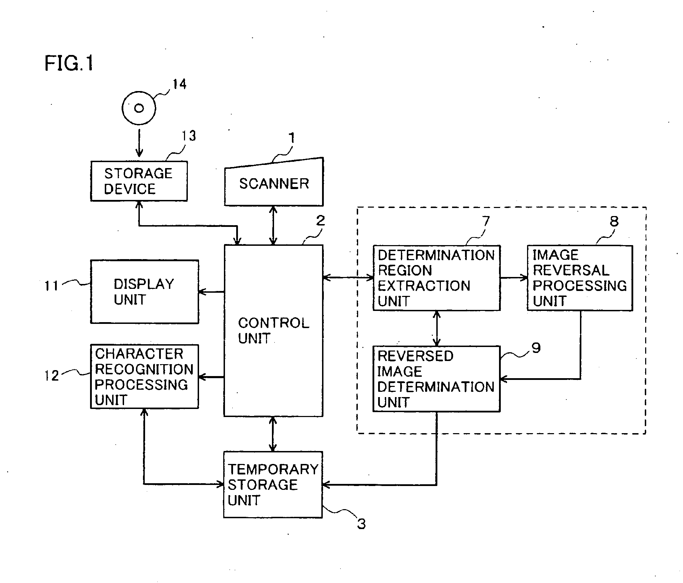

Fig. 1 is a diagram showing an entire configuration of an image processing device in accordance with an embodiment of the present invention. Referring to the figure, the image processing device includes a control unit 2 for controlling the entire image processing device, a scanner 1 for reading an image formed on a recording medium such as paper and outputting the read image to control unit 2, a temporary storage unit 3 formed of a Random Access Memory (RAM) or the like, connected to the control unit for temporarily storing information, a display unit 11 connected to control unit 2 for displaying prescribed information based on an instruction from control unit 2, a character recognition processing unit 12 connected to control unit 2 and temporary storage unit 3 for recognizing a character included in the image, a determination region extraction unit 7 connected to control unit 2 for extracting a determination region from the image, a reversed image determination unit 9 connected to determination region extraction unit 7 and temporary storage unit 3 for determining whether the determination region is a reversed image, an image reversal processing unit 8 connected to determination region extraction unit 7 and reversed image determination unit 9 for performing a reversal process on the determination region determined as a reversed image, and a storage device 13 connected to control unit 2 for reading or writing a program or data recorded on a recording medium 14.

Scanner 1 optically reads an image formed on a document such as paper for optoelectronic conversion and outputs the image converted to electronic data to control unit 2. Control unit 2 stores the image received from the scanner into temporary storage unit 3. It is noted that, in place of scanner 1, an image pick-up device such as a digital camera and a video camera may read an image recorded on recording medium 14 from storage device 13 and output the image to control unit 2 as long as an image can be output as electronic data to control unit 2.

Display 11 is a display device such as a liquid crystal device, a plasma display panel, or a cathode ray tube (CRT). Based on an instruction from control unit 2, display unit 11 presents an image read by scanner 1, an image for which reversal processing as described later has been executed, and the like.

Storage device 13 is a CD-ROM (Compact Disk Read Only Memory) drive that can write data or programs in recording medium 14 or write them from recording medium 14. In place of a CD-ROM, recording medium 14 may be a FD (Flexible Disk), a hard disk, a magnetic tape, a cassette tape, an optical disk (MO (Magnetic Optical Disk)/ MD (Mini Disk)/ DVD (Digital Versatile Disk)), an IC card (including a memory card), an optical card, or a semiconductor memory such as a mask ROM, an EPROM, an EEPROM, and a flash ROM. Storage device 13 may be a device corresponding to recording medium 14.

Although determination region extraction unit 7, image reversal processing unit 8, and reversed image determination unit 9 are provided as separate circuits from control unit 2, they may be realized in control unit 2 by causing an image processing program to be executed in control unit 2. Such an image processing program is generally recorded on recording medium 14 for distribution. The image processing program recorded on recording medium 14 is read by storage device 13, and the read image processing program is executed in control unit 2. The execution of the image processing program in control unit 2 causes determination region extraction unit 7, image reversal processing unit 8, and reversed image determination unit 9 to be realized in control unit 2. Similarly, character recognition processing unit 12 may also be realized in control unit 2.

Furthermore, the image processing program referred to herein is a concept including not only a program directly executable in control unit 2 but also a program in a source program format, a compressed program, an encrypted program, and the like.

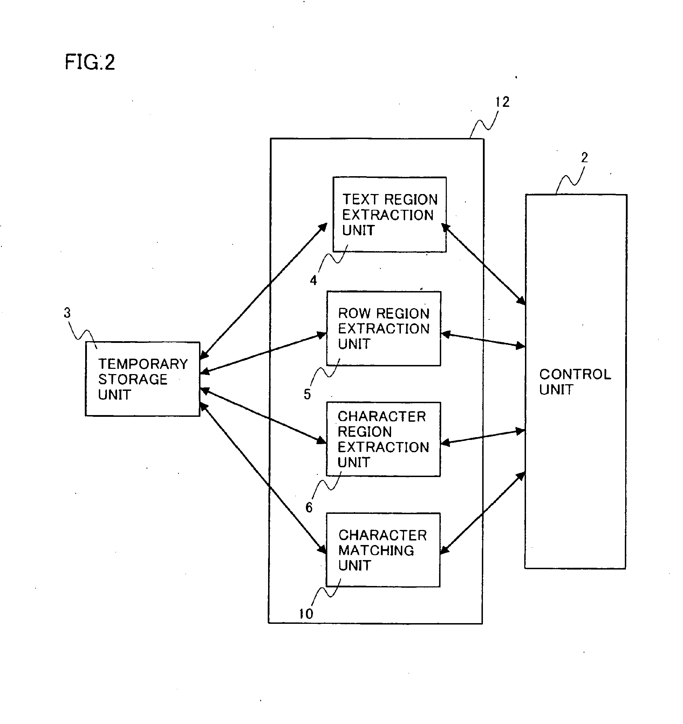

Fig. 2 is a functional block diagram showing the detail of the function of the character recognition processing unit. Referring to Fig. 2, character recognition processing unit 12 includes a text region extraction unit 4, a row region extraction unit 5, a character region extraction unit 6, and a character matching region 10. Text region extraction unit 4 reads an image output by scanner 1 from temporary storage unit 3 and extracts a text region including a character from the image. The extraction of the text region is performed, for example, by measuring a gray level distribution of the image and extracting a region having a gray level equal to or lower than a prescribed gray level threshold value as a text region. The gray level threshold value is held in text region extraction unit 4 beforehand. Then, after the extracted image of the text region is stored in temporary storage unit 3, control unit 2 is notified as such.

Row region extraction unit 5 reads the image of the text region extracted by text region extraction unit 4 from temporary storage unit 3 and obtains a histogram of pixels in the X axis direction of the image. Then, a region comprised of an array (line) of pixels in the X axis direction in which the value of the histogram is equal to or higher than the threshold value is extracted as a row. For the extracted region, row information (the number of rows, a position of each row) indicative of a position in the image of the region is obtained to be stored in temporary storage unit 3. Thereafter, control unit 2 is notified that the extraction of the row region is completed.

Character region extraction unit 6 obtains a histogram of pixels in the Y axis direction for each row based on the row information stored in temporary storage unit 3. Then, a part where the histogram has the value equal to or higher than a threshold value is extracted as a temporary character region. A blank between temporary character regions is compared with a character region in-between blank size stored beforehand in character region extraction unit 6. The blank between temporary character regions smaller than the character region in-between blank size is assumed as a blank in a character. A character region is extracted by integrating the temporary character regions, and character information (a position within a row) is obtained to be stored in temporary storage unit 3. Then, control unit 2 is notified that the extraction of the character region is completed.

Character matching unit 10 reads an image of a row region to be processed from temporary storage unit 3 based on the row information stored in temporary storage unit 3 and segments a character from the image. Then, the segmented image is matched to a character recognition dictionary contained in character matching unit 10 for character recognition. Then, the result of character recognition is stored in temporary storage unit 3.

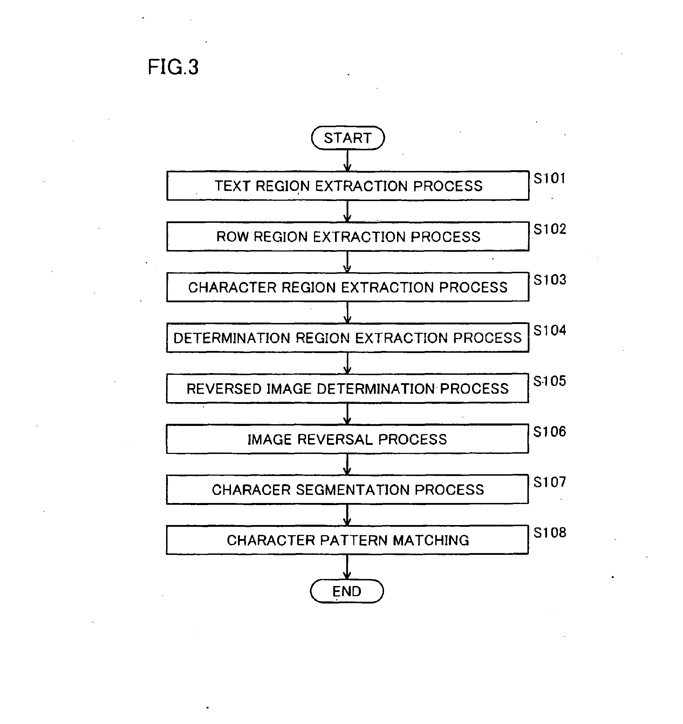

Fig. 3 is a flowchart showing a flow of a process executed in the image processing device in accordance with the embodiment of the present invention. Referring to Fig. 3, when the user of the image processing device reads a document using scanner 1 to input an image, scanner 1 converts the read document into electronic data and transfers the image as electronic data to control unit 2 Control unit 2 corrects the slope of the transferred image for storage into temporary storage unit 3. Well-known techniques can be used to correct the slope of the image. Such techniques are described, for example, in Japanese Patent Laying-Open No. 5-182022. Japanese Patent Laying-Open No. 5-182022 is incorporated herein by reference.

Control unit 2 instructs text region extraction unit 4 of character recognition processing unit 12 to extract the image in the text region. Text region extraction unit 4 extracts a text region in which a character is represented from the image stored in temporary storage unit 3 and stores the image in the extracted text region into temporary storage unit 3. Then, control unit 2 is notified that the process is completed (S101).

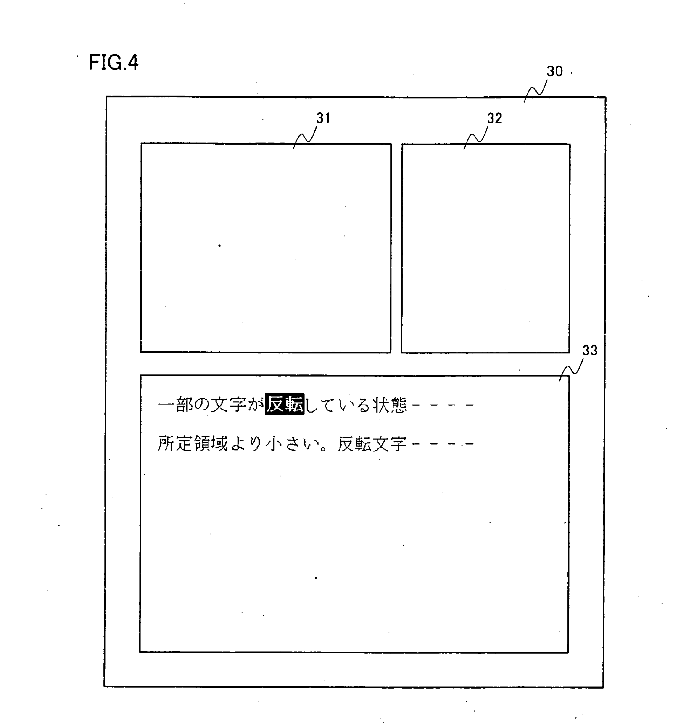

Fig. 4 is a diagram showing an exemplary image obtained by reading a document using scanner 1. Referring to Fig. 4, an image 30 includes text regions 31, 32, and 33 in which characters are represented. Text region extraction unit 4 executes a process of extracting text regions 31, 32, and 33 from image 30. The extraction of the text region is performed by measuring a gray level distribution of image 30 and comparing the gray level distribution with a gray level threshold value, where a region having a gray level distribution equal to or lower than a gray level threshold value of a text region is extracted as a text region. Respective images of text regions 31, 32, and 33 are thereby stored in temporary storage unit 3.

Returning to Fig. 3, upon reception from text region extraction unit 4 that the process is completed, control unit 2 instructs row region extraction unit 5 to extract a row region. Row region extraction unit 5 thereby extracts a row region from the image in the text region stored in temporary storage unit 3 (S 102).

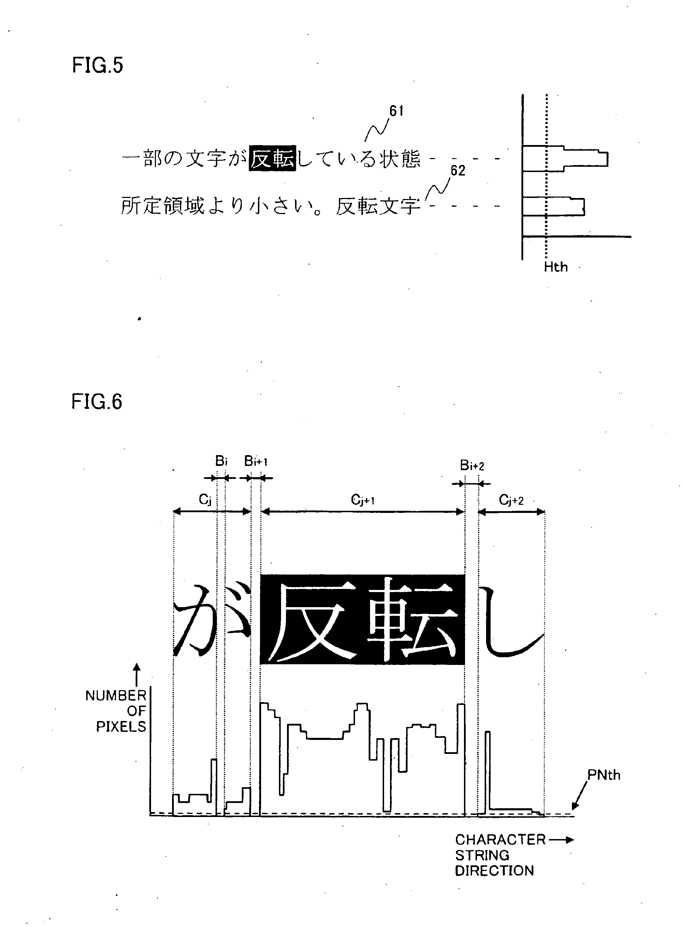

Fig. 5 is a diagram illustrating an exemplary row region extraction process. Row region extraction unit 5 reads an image in a text region stored in temporary storage unit 3. The image in the read text region includes rows 61 and 62 in which characters are arranged. In row region extraction unit 5, a process of extracting the regions of these rows 61 and 62 is executed. Therefore, row region extraction unit 5 obtains a histogram of pixels in the X axis direction (the horizontal direction in the figure) for the image in the text region read from temporary storage unit 3. Here, the image in the text region is binarized beforehand, and a cumulative value of the number of black pixels is obtained for each line. A line in which the obtained value of the histogram is equal to or higher than a threshold value Hth (the array of the pixels in the horizontal direction) is extracted as a row region. For the row region obtained in this way, row information (the number of rows, a position of each row) is obtained from the coordinates of the image for storage into temporary storage unit 3. In Fig. 5, since the values of the histograms of rows 61 and 62 are equal to or higher than threshold value Hth, rows 61 and 62 are extracted, and the count (number) of the rows extracted from the image in the text region and a position in the image of each row are stored in temporary storage unit 3.

Returning to Fig. 3, upon reception from row region extraction unit 5 that the process is completed, control unit 2 instructs character region extraction unit 6 to extract a character region for each row of the text region. Upon reception of the instruction from control unit 2, character region extraction unit 6 extracts a character region for each row based on the row information stored in temporary storage unit 3 and obtains information of the extracted character region for storage unto temporary storage unit 3. Then, control unit 2 is notified that the extraction of the character region is completed (S103). Character region extraction unit 6 decides the image to be processed based on the row information stored in temporary storage unit 3. Therefore, the image to be processed by character region extraction unit 6 is the image in the row region extracted by row region extraction unit 5. Character region extraction unit 6 extracts a character region for each row region.

Fig. 6 is a diagram illustrating an exemplary character region extraction process. Referring to Fig. 6, here shown is a portion in which the following Japanese characters and Chinese characters, which are a part of the row region extracted by row region extraction unit 5, are represented. が反転し

The following Chinese characters are also represented as reversed characters, by way of example. 反転

Character region extraction unit 6 reads an image in a certain row region based on the row information stored in temporary storage unit 3 to obtain a histogram of pixels in the Y axis direction. The lower portion of Fig. 6 shows the histogram of the pixels. Here, the histogram is obtained by binarizing the image in the character region beforehand and counting the number of black pixels in the Y axis direction. Then, the portion in which the value of the histogram is equal to or higher than a threshold value PNth is extracted as a temporary character region. Blanks between temporary character regions, Bi, Bi+1, Bi+2 are compared with a character region in-between blank size stored beforehand in character region extraction unit 6. If the blank between the temporary character regions is smaller than the character region in-between blank size, the blank between the temporary character regions is regarded as a blank within a character and the temporary character regions are integrated. Therefore, the following Japanese character shown in Fig. 6, for example, is extracted as a region of one character. が

If the blank between temporary character regions is larger than the character region in-between blank size, it is regarded as a blank between characters and extracted as a different character region. In the example shown in Fig. 6, blank between temporary character regions Bi is regarded as being smaller than the character region in-between blank size, while blanks between temporary character regions Bi+1, Bi+2 are regarded as being larger than the character region in-between blank size. As a result, a region Cj where the following Japanese character (1) is represented, a region Cj+1 where the following Chinese characters (2) are represented, and a region Cj+2 where the following Japanese character (3) is represented are extracted respectively as character regions. (1) が (2) 反転 (3) し

The position in the row of the character region extracted in this manner is obtained as character region information and stored in temporary storage unit 3.

Returning to Fig. 3, upon reception from character region extraction unit 6 that the process is completed, control unit 2 instructs determination region extraction unit 7 to extract a determination region. Determination region extraction unit 7 extracts a determination region for each character region based on the character region information stored in temporary storage unit 3. Then, upon completion of the extraction of the determination region, the determination region information is transferred to reversed image determination unit 9, which is instructed to perform a determination process (S104).

Then, reversed image determination unit 9 determines whether or not the image in the determination region is a reversed image based on the determination region information sent from determination region extraction unit 7 and notifies image reversal processing unit 8 of the determination result (S 105). If the determination result in reversed image determination unit 9 indicates a reversed image, image reversal processing unit 8 performs a process of reversing an image in a portion corresponding to the determination region on the image stored in temporary storage unit 3. Then, determination region extraction unit 7 is notified that the image reversal process is completed (S106). Determination region extraction unit 7 repeats the process until the process is completed for all the rows corresponding to the row information stored in temporary storage unit 3. Then, upon completion of the process for all the rows, control unit 2 is notified that the process is completed.

Thereafter, control unit 2 instructs character matching unit 10 to perform character recognition. Character matching unit 10 segments a character based on the row information stored in temporary storage unit 3 (S 107) and performs character recognition by matching the segmented character to the character recognition dictionary contained in character matching unit 10 (S108). The image based on which character matching unit 10 clips a character is an image in which a reversed character has already been subjected to reversal processing. Then, character matching unit 10 stores the recognition result in temporary storage unit 3.

Then, upon completion of character recognition for all the rows, character matching unit 10 notifies control unit 2 that the process is completed. Control unit 2 displays the character recognition result stored in temporary storage unit 3 on display unit 11, and the character recognition of the input image then ends.

It is noted that although here the image is input from scanner 1 in the image processing unit in accordance with the present embodiment, an image picked up and output by an image pick-up device such as a digital camera and a video camera may be input. Alternatively, an image recorded on recording medium 14 may be read and input by storage device 13. Alternatively, an image may be received from another device connected to the image processing device through a local area network or the like. In this case, the connection between the image processing device and another device may be wired or wireless, or may be via communications using broadcast radio waves.

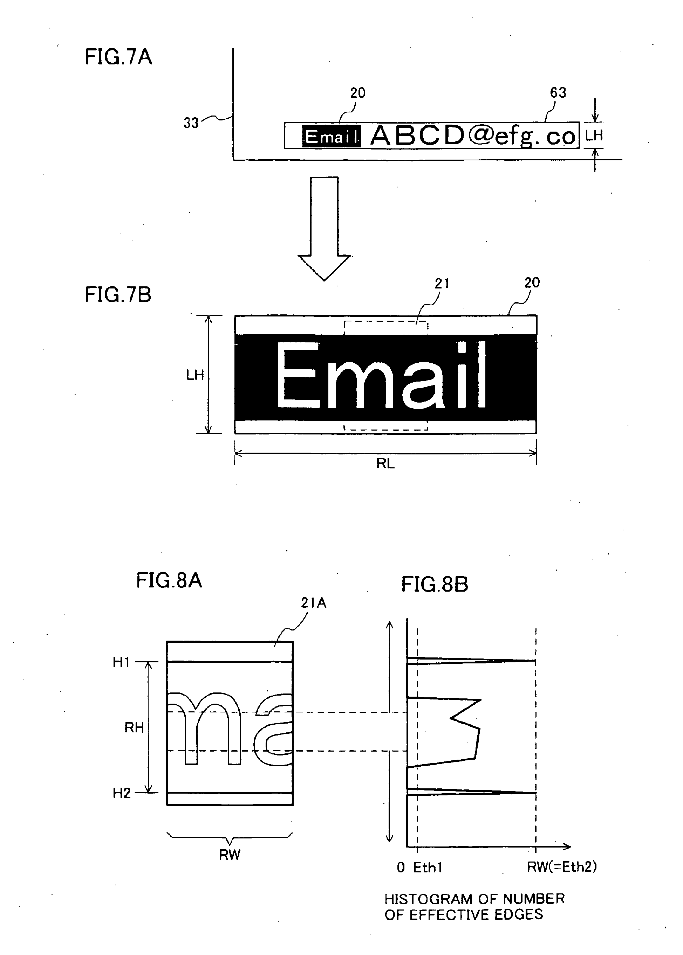

The process of extracting a determination region to be executed in determination region extraction unit 7 will now be described. Determination region extraction unit 7 receives an instruction of extraction of a determination region from control unit 2 and reads a character region from temporary storage unit 3. Figs. 7A and 7B are diagrams showing an exemplary character region. Fig. 7A shows an exemplary character region 33. Character region 33 includes a row region 63. Row region 63 includes a plurality of character regions. Characters including an email address "Email ABCD@efg.co" are represented here in row region 63. Character region 20 is a part of the email address. Character region extraction unit 6 stores the number of character region 20 in row region 63 and the height LH and the width of row region 63 as character region information when extracting the character region 20. Determination region extraction unit 7 uses the stored character region information to read an image specified by the character region information from the image stored in temporary storage unit 3.

Determination region extraction unit 7 sets a partial region 21 in the middle portion in the lengthwise direction of character region 20. Partial region 21 has a width of 30 % of width RL of character region 20 and a height of an average height LH of the row region including character region 20. Then, the extraction of the determination region is performed in the following procedure.

(1) An edge value of each pixel is calculated for an image in partial region 21. The edge value is a difference in pixel value from a peripheral pixel and can be calculated using a variety of well-known techniques such as Sobel operator and Lapracian in the case of a gray scale image. Even if an image is a binary image or a color image, the edge value can be calculated using these well-known techniques.

(2) The histogram of the number of pixels (effective edges) each having an edge value equal to or higher than a threshold value is obtained in the X axis direction with respect to the Y axis in the partial region. Fig. 8A shows an edge image 21 A in partial region 21 and Fig. 8B shows the histogram of the number of effective edges. Referring to Figs. 8A and 8B, the edge image is an image showing the outline of the character and the outline of the background of the reversed character. Therefore, the histogram of the effective edge has the value that is the total sum of the number of pixels for each outline in the X axis direction. In other words, the histogram has a low value in the background portion and a high value in the outline portion of the character and the outline portion of the background.

(3) The histogram obtained in (2) is scanned from the middle of partial region 21 in order to set a determination region where a region that satisfies the following conditions is set as a height RH of the determination region and the width of the partial region is set as a width RW of the determination region.

(Condition 1) The state of Ei<Eth1 continues by a prescribed number of lines after the number of effective edges Ei becomes smaller than threshold value Eth1.

(Condition 2) Ei ≧ Eth2 after the number of effective edges Ei becomes smaller than threshold value Eth2.

It is noted that although partial region 21 is set from character region 20 here, a determination region may be extracted from the entire character region 20 without setting partial region 21.

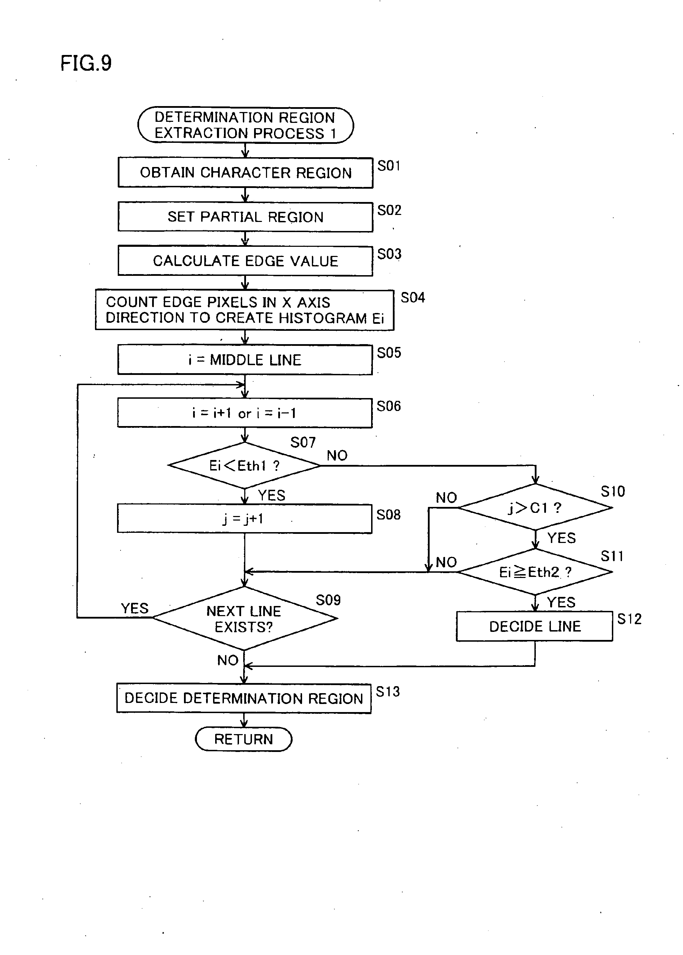

Fig. 9 is a flowchart showing a flow of a determination region extraction process to be executed in the image processing device in accordance with the embodiment of the present invention. Here, character region 20 shown in Fig. 7B is extracted by way of example. Referring to Fig. 9, first, based on the character region information stored in temporary storage unit 3, the image in that character region is extracted (S01). Then, partial region 21 is set approximately at the middle portion of the obtained character region 20 (S02). Although this partial region 21 is set in the middle of character region 20, the position is not limited thereto and it may be set, for example, at an end portion as long as it is within character region 20. Furthermore, as described above, the process of setting a partial region is not always necessary. When a partial region is not set, the following process is executed for the entire character region. Although in the present embodiment a partial region is set by way of illustration, a partial region is regarded as a character region in the description where no partial region is set. The partial region is set because less number of pixels to be processed increases the processing speed.

When partial region 21 is set at step S02, an edge image 21A of the set partial region 21 is calculated (S03). Furthermore, the edge pixels are counted in the X axis direction for each line from the calculated edge image 21 A whereby histogram Ei is created (S04). This histogram Ei is a histogram shown in Fig. 8B.

Then, the created histogram Ei is scanned in the Y axis direction from approximately the middle portion in the Y axis direction of edge image 21 A toward the end portion of the partial region (step S05 to step S12). The Y axis direction includes two directions of the + side and to the - side, and the process described below is executed for each direction.

At step S05, in order to decide a line at which scanning starts, a variable i is set at a value corresponding to the line approximately at the middle of partial region 21 such that the line at which scanning starts falls in approximately the middle of the Y axis direction of partial region 21.

Then, at the next step S06, if the line is scanned to the + side of the Y axis direction, variable i is incremented, and if the line is scanned to the - side, variable i is decremented.

At the next step S07, it is determined whether value Ei of the histogram is smaller than threshold value Eth1 . If true, the process goes on to step S08, and if false, the process goes onto step S 10. At step S08, a variable j is incremented. Variable j is a variable for counting the number of lines in which value Ei of the histogram is smaller than threshold value Eth1. This is used to determine Condition 1 as described above. Then, at the next step S09, it is determined whether or not the next line exists, and if there exists the next line, the process returns to step S06. If not, the process goes on to step S13.

On the other hand, at step S 10, it is determined whether or not variable j is greater than a constant C1. If true, the process goes on to step S11, and if not, the process goes on to step S09. Constant C1 is a threshold value for defining the number of lines being continuous in which the value of the histogram is threshold value Eth1. This threshold value is a threshold value for determining Condition 1

At step S 11, it is determined whether or not value Ei of the histogram is greater than threshold value Eth2. If true, the process goes on to step S12, and if false, the process goes on to step S09. This is a process for determining Condition 2 as described above. Then, at step S12, a line i in which value Ei of the histogram is greater than threshold value Eth2 at step S 11 is decided as a line for defining a determination region. The line i decided in this way is a straight line parallel to the X axis which specifies the upper or lower outline of the determination region. When the histogram is scanned toward the + side of the Y axis, line i specifies the upper outline of the determination region, and when the histogram is scanned to the - direction of the Y axis, line i specifies the lower outline of the determination region.

At step S13, a determination region is decided which is defined by the line i decided by the scanning to the + side of the Y axis and the line i decided by the scanning to the - side of the Y axis as decided at step S12 and the lines (lines parallel to the Y axis) specifying the outline in the horizontal direction of the partial region as decided at step S02. Here, referring to Fig. 8A again, the determination region extracted by the determination region extraction process has a distance RH in the vertical direction and a distance RW in the horizontal direction.

In this way, in the determination region extraction process, a cumulative total for each line of the number of edge pixels of the partial region is used for extraction, so that the boundary of the background of the reversed image is regarded as the boundary of the determination region. Therefore, when an image reversal process is executed later, the background of the reversed image surely undergoes the reversal processing up to the boundary. Therefore, the reversal processing is not executed on the pixel that is not reversed in the neighborhood of the background of the reversed image, so that only the background of the reversed image can surely undergo the reversal processing.

<Modification to Determination Region Extraction Process>

In the determination region extraction process as described above, the histogram of the edge pixels in the partial region is used to extract a determination region. In the modified determination region extraction process, the number of black pixels continuous in the X axis direction (black run) is used to extract a determination region. Determination region extraction unit 7 extracts a determination region in the following procedure. Here also, character region 20 shown in Fig. 7B is to be processed by way of illustration.

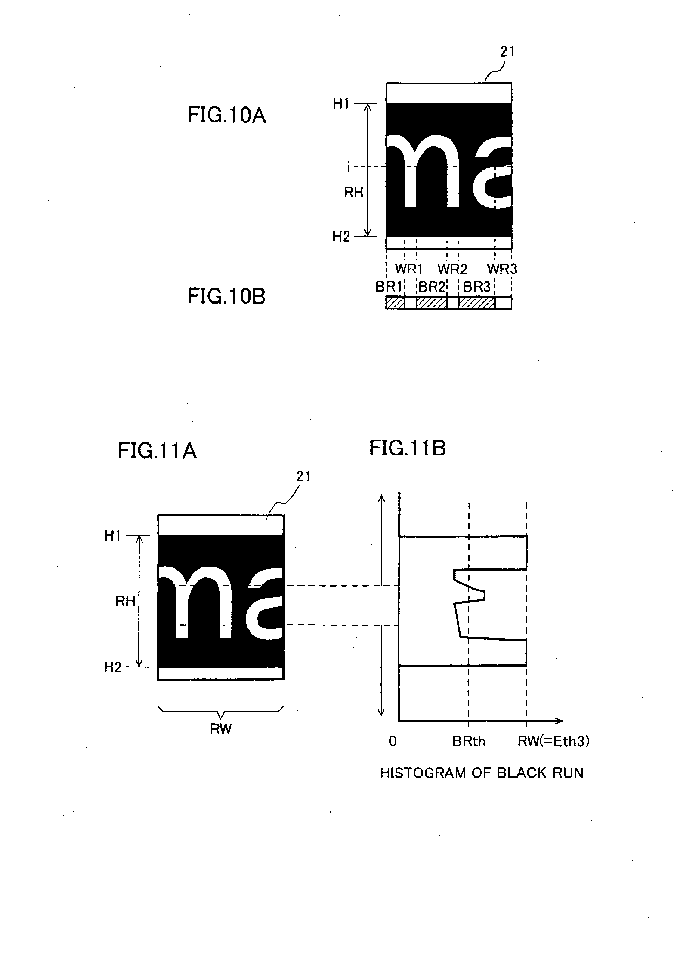

(1) The histogram of black runs in the X axis direction is obtained with respect to the Y axis of character region 20. Figs. 10A and 10B are diagrams illustrating black runs. Fig. 10A shows partial region 21 and Fig. 10B shows an array of pixels in line i. The pixels on line i parallel to the X axis direction in partial region 21 are arranged such that black pixels and white pixels are respectively continuous as shown in Fig. 10B. The figure includes, from the left-side direction, arrays of black pixels BR1, BR2, BR3 and arrays of white pixels WR1, WR2, WR3. In each array, black pixels or white pixels are continuous. A black run in accordance with the present embodiment refers to a maximum value of a black run in line i. In Fig. 10B, black run BRi is BR3.
The histogram shows the value of the black run for each line. Fig. 11A shows an image in partial region 21, and Fig. 11B shows a histogram of black runs. As is clear from the figure, since partial region 21 includes a reversed character, the black run assumes the maximum value in the region of the background, that is, a value equal to the number of pixels corresponding to width RW of partial region 21.
(2) The histogram of black runs obtained in (1) is scanned from the middle portion of partial region 21, and a region that satisfies the following conditions is extracted from the partial region and set as a determination region. When the image reversal process described later is executed based on the partial region, a partial region is reset in order to set a partial region as a determination region.

(Condition 1) A prescribed number of lines with BRi $\geqq$ BRth are continuous after the black run BRi becomes greater than the threshold value BRth. Here, the threshold value BRth can be, for example, a ratio of partial region 21 to width RW, and is preferably 10%.
(Condition 2) A prescribed number of lines with BRi<BRth are continuous after the black run BRi becomes smaller than the threshold value BRth.

The lines that satisfy these two conditions are extracted, and the extracted lines specify the outline of the determination region. In Fig. 11A, these lines are positioned at H1, H2 in the Y axis direction and parallel to the X axis. A determination region specified by the lines decided in this way is set.

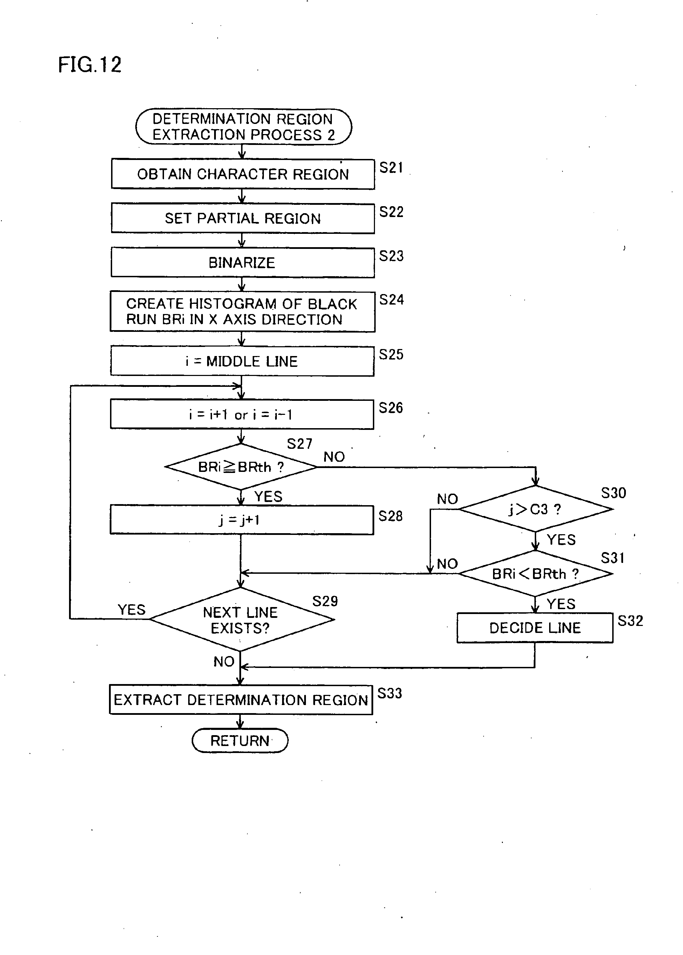

Fig. 12 is a flowchart showing a flow of a modified determination region extraction process to be executed in the image processing device in accordance with the embodiment of the present invention. Referring to Fig. 12, step S21 and step S22 are the same processing with step S01 and step S02 in the determination region extraction process shown in Fig. 9. Therefore, the description will not be repeated herein.
At step S23, the image in the partial region extracted at step S22 is binarized.
A binary image in the partial region comprised of two values of white pixel and black pixel is thereby obtained. Then, histogram BRi of black runs in the X axis direction is created (S24). Through this process, histogram BRi shown in Fig. 11B is created.
Then, the histogram is scanned from approximately the middle of the Y axis direction of partial region 21 to the + direction and to the - direction of the Y axis for each line (step S25 to step S32).
Therefore, at step S25, the value of the middle line is set at a variable i so that the first line i at which scanning starts is at approximately the middle of the Y axis direction of partial region 21 (step S25).
Then, when scanning is performed in the + direction of the Y axis, variable i is incremented, and when scanning is performed in the - direction of the Y axis, variable i is decremented (step S26).
At step S27, it is determined whether or not black run BRi in line i is equal to or greater than threshold value BRth. If true, the process goes on to step S 28, and if false, the process goes on to step S30.
At step S28, variable j is incremented. Variable j is a variable for determining that a prescribed number of lines i each having black run BRi equal to or greater than threshold value BRth are continuous. This is to determine the aforementioned Condition 1. After variable j is incremented at step S28, the process goes on to step S29. At step S29, it is determined whether or not the next line to be scanned exists. If any, the process goes on to step S26, and if not, the process goes on to step S33.

On the other hand, at step S30, it is determined whether or not variable j is greater than a constant C3. If true, the process goes on to step S31, and if false, the process goes on to step S29. Constant C3 is a threshold value for determining the number of the lines each having black run BRi equal to or greater than threshold value BRth to determine the aforementioned Condition 1.

Then, at step S31, it is determined whether or not black run BRi becomes smaller than threshold value BRth. If true, the process goes on to step S32, and if false, the process goes onto step S29. This is to determine the aforementioned Condition 2. When black run BRi becomes smaller than threshold value BRth, the line of the boundary of the background of a reversed character is indicated. Therefore, such a line i is decided as a line that defines the outline of the determination region (step S32). Thereafter, the process goes on to step 533.

At step S33, a determination region is extracted which is defined by lines i decided at step S32 and lines defining the left and the right of the partial region (parallel lines in the Y axis) (step S33).

Lines i decided at step S32 includes line i decided by scanning in the + direction of the Y axis and line i decided by scanning in the - direction of the Y axis. Line i decided by scanning in the + direction of the Y axis defines the upper boundary of the determination region while line i decided by scanning in the - direction of the Y axis defines the lower outline of the determination region. Furthermore, the left and right boundaries of the determination region are the left and right boundaries of the partial region. Therefore, the extracted determination region is a strip-like (rectangular) region.

As described above, in the modified determination region extraction process, the determination region is extracted based on the variations in black run for each line, so that the boundary of the background of a reversed image can be set as the boundary of the determination region. Therefore, in the image reversal process performed later, only the background of a reversed image can surely undergo the reversal processing, so that the pixels in the neighborhood of the background of the reversed image are not subjected to the reversal processing.

It is noted that although a determination region is extracted based on variations in black run in the present embodiment, a determination region may be extracted based on variations in white run. In such a case, Condition 1 is such that a prescribed number of lines with WRi $\leqq$ WRth are continuous after white run WRi becomes smaller than threshold value WRth. In addition, Condition 2 is such that lines with WRi>WRth are continuous after white run WRi becomes greater than threshold value WRth.

A reversed image determination process of determining whether or not a character region is formed of a determination image will now be described using an image in a determination region. This reversed image determination process is a process executed in reversed image determination unit 9 at step S 105 in Fig. 3 described above. Reversed image determination unit 9 performs a reversed image determination in the following procedure.

(1) Based on the determination region information, a determination region is read from temporary storage unit 3 and binarized.

(2) With respect to the Y axis direction of the determination region, black run BRLi and white run WRLi in the X axis direction are obtained using the following equation. Black run BRLi is the maximum value of black pixels continuous in line i and white run WRLi is the maximum value of the number of white pixels in line i.

$$BRLi = Max\ (BRk) \qquad \cdots\ (1)$$

$$WRLi = Max\ (WR1) \qquad \cdots\ (2)$$

where i=-RH/2 to RH/2, k=1 to m, and 1=1 to n.

In the determination region shown in Fig. 10A, BRLi=BR3 and WRLi=WR3.

(3) The line is scanned from the middle portion to the + direction and to the - direction of the Y axis direction of the determination region, and black run BRLi and white run WRLi are used to determine the color of the background according to the following conditions.

(3-1) When run lengths equal to or greater than threshold value RLth are continuous for only runs of one color, that color is set as the color of the background, and the following determination (3-4) is executed. In other cases, the determination (3-2) is executed. Threshold value RLth is preferably, for example, 90 % of width RL of determination region 22.

(3-2) When run lengths equal to or greater than threshold value RLth are continuous for both black runs and white runs, a comparison between the longest runs is preformed. The color of the longer run is set as the color of the background, and the determination (3-4) is performed. In other cases, the determination (3-3) is executed.

(3-3) The total sum of run lengths TBR, TWR is obtained for both black runs and white runs. When TBR-TWR $\geqq$ TRLth, black is set as the color of the background, when TBR-TWR>TRLth, white is set as the color of the background, and the determination (3-4) is performed. Threshold value TRLth is preferably, for example, 80% of the area of determination region 22.

(3-4) If the color of the background is black, it is determined as a reversed image, and if the color of the background is white, it is determined as a non-reversed image.

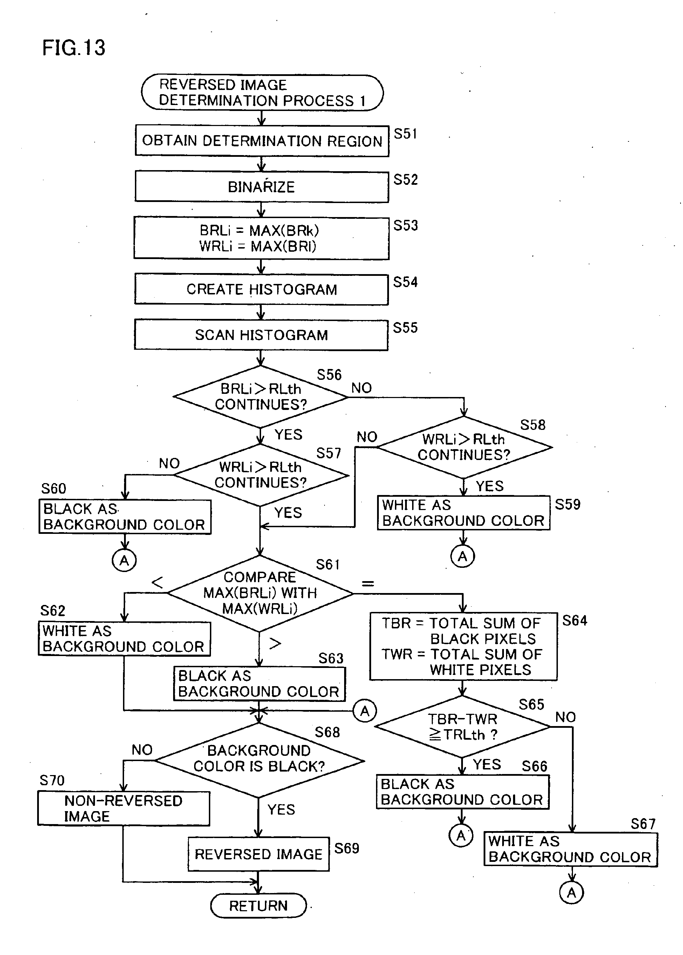

Fig. 13 is a flowchart showing a flow of a reversed image determination process executed in the image processing device in accordance with the present embodiment. Referring to Fig. 13, first, reversed image determination unit 9 obtains an image in a determination region from temporary storage unit 3 based on the determination region information stored in temporary storage unit 3 (S51). Then, the obtained image in the determination region is binarized (S52).

Furthermore, black run BRLi which is the maximum value of the array having black pixels being continuous and white run WRLi which is the maximum value of the array having white pixels being continuous in the binarized image in the determination region are calculated (S53) for creating histograms (S54).

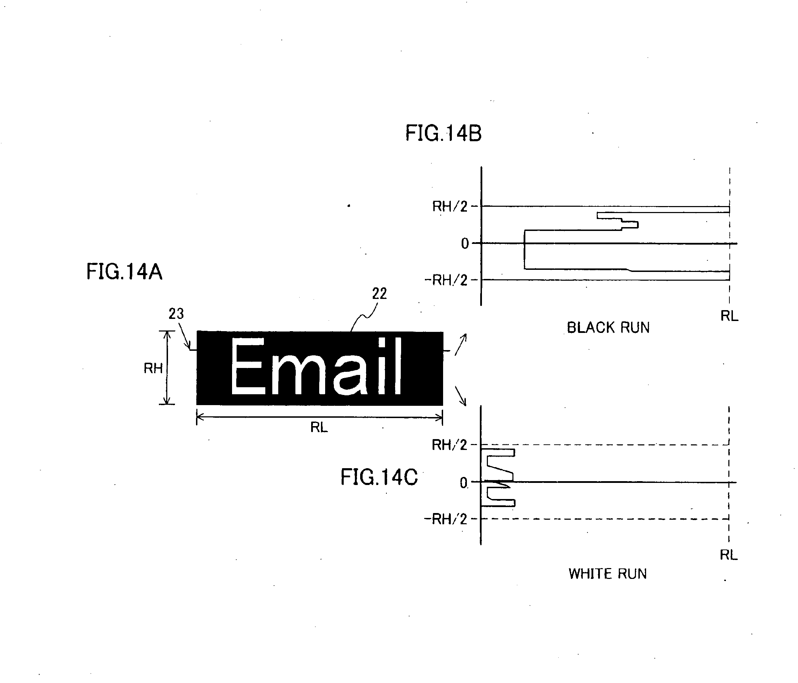

Fig. 14A shows a determination region 22 in which a reversed image representing characters "Email" is shown. Determination region 22 has a horizontal length RL and a vertical length RH. Fig. 14B shows a histogram of black run, and Fig. 14C shows a histogram of white run.

Returning to Fig. 13, at step S55, the histogram created at step S54 is scanned from approximately the middle portion to the + direction and to the - direction, respectively, in the Y axis direction (S55). Therefore, the steps following step S56 are executed on the respective scanning in the + direction and in the - direction of the Y axis.

At step S56, it is determined whether black run BRLi in line i is greater than threshold value RLth and such lines i are continuous. If it is determined as being continuous, the process goes on to step S57, and if not, the process goes on to step S58.

At step S57, it is determined whether white run WRLi in line i is greater than threshold value RLth and such lines i are continuous. If it is determined as being continuous, the process goes on to step S61, and if not, the process goes on to step S60. If the process goes on to step S61, the aforementioned process (3-3) is executed.

At step S60, the background color is determined as black. In this process, lines i in which black run BRLi is greater than threshold value RLth are continuous, and lines in which white run WRLi is not greater than threshold value RLth are continuous. In this case, black is determined as the background color based on the determination in the aforementioned process (3-1).

On the other hand, when it is determined that black run BRLi in line i is not greater than threshold value RLth at step S56, it is determined at step S58 whether or not white run WRLi is greater than threshold value RLth and such lines i are continuous. If it is determined as being continuous, the process goes on to step S59, and if not, the process goes on to step S61. When the process goes on to step S59, only a prescribed number of white runs WRLi greater than threshold value RLth are continuous and black run BRLi is not greater than threshold value RLth. In such a case, white is determined as a background color (S59). In this case, white is determined as a background color based on the aforementioned determination in (3-1).

When lines i in which black run BRLi and white run WRLi are each greater than threshold value RLth are continuous and lines in which white run WRLi is greater than threshold value RLth are continuous, the process goes on to step S61. In such a case, the determination in the aforementioned process (3-2) is followed. Therefore, the maximum value MAX(BRLi) of black run BRLi is compared with the maximum value MAX(WRLi) of white run WRLi. When both are the same, the process goes on to step S64. When the former is smaller than the latter, the process goes on to step S62, and when the former is greater than the latter, the process goes on to step S63.

At step S62, the maximum value MAX(BRLi) of black run BRLi is smaller than the maximum value MAX(WRLi) of white run WRLi. In this case, the background color is determined as white, and the process goes on to step S68.

At step S63, the maximum value MAX(BRLi) of black run BRLi is greater than the maximum value MAX(WRLi) of white run WRLi. In this case, the background color is determined as black, and the process goes on to step S68.

At step S64, the maximum value MAX(BRLi) of black run BRLi is equal to the maximum value MAX(WRLi) of white run WRLi. In this case, the aforementioned determination in (3-3) is followed. Therefore, the total sum of black pixels TBR in the determination region and the total sum of white pixels TWR in the determination region are calculated (S64), and the difference between them is compared with threshold value TRLth (S65). In other words, it is determined whether or not TBR-TWR $\geqq$ TRLth is true. If true, the process goes on to step S66, and if false, the process goes on to step S67.

At step S66, the process goes on to step S68 assuming that the background color is black, and at step S67, the process goes on to step S68 assuming that the background color is white. At step S68, it is determined whether or not the background color is determined as black through the aforementioned process. Then, if it is determined as black, the process goes on to step S69, and if not, the process goes on to step S70. At step S69, the determination region is determined as a reversed image, and the process then ends. On the other hand, at step S70, the determination region is determined as a non-reversed image, and the process then ends.

As described above, in the image processing device in accordance with the present embodiment, it is determined whether or not the image is reversed based on the black runs and the white runs in the determination region. Therefore, even when the characters occupy the major part of the determination region, the run length in the background portion is used for determination, so that it can be determined accurately whether or not a reversed image is formed.

<First Modification to Reversed Image Determination Process>

A first modification to the reversed image determination process will now be described. The reversed image determination process in accordance with the first modification differs from the reversed image determination process as described above using a run length to determine whether a reversed image is formed, in that determination is made based on the ratio of black run BRLi to length RL in the X axis direction of the determination region and the ratio of white run WRLi to length RL in the X axis direction of the determination region. In the following, only a point different from the foregoing reversed image determination process will be described.

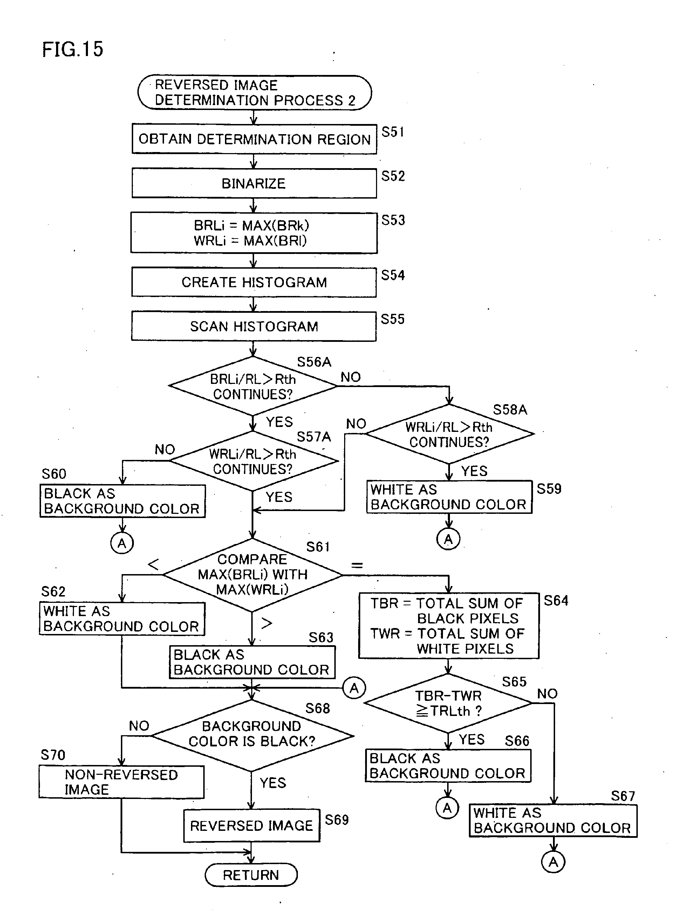

Fig. 15 is a flowchart showing a flow of the first modification to the reversed image determination process executed in the image processing device in accordance with the embodiment of the present invention. Referring to Fig. 15, steps S56A, S57A, and S58A are different from those in the reversed image determination process shown in Fig. 13. The other processes are similar to the processes shown in Fig. 13, and therefore the description will not be repeated here.

At step S56A, it is determined whether or not the ratio between black run BRLi and length RL in the X axis direction of determination region 22 is greater than threshold value Rth and such lines i are continuous. If it is determined as being continuous, the process goes on to step S57A, and if not, the process goes on to step S58A. Threshold value Rth is preferably, for example, 90%.

The same determination is executed at step S57A and step S58A. Specifically, it is determined whether or not the ratio between white run WRLi and length RL in the X axis direction of determination region 22 is greater than threshold value Rth and such lines i are continuous. At step S57A, if true, the process goes on to step S61, and if false, the process goes on to step S60. On the other hand, at step S58A, if true, the process goes on to step S59, and if false, the process goes on to step S61.

As described above, instead of comparing a run length with a prescribed threshold value RLth, the ratio of black run and white run to the respective lengths in the X axis direction of the determination region is compared with a prescribed threshold value Rth. Therefore, even when the length in the X axis direction of determination region 22 varies, determination can be performed without changing threshold value Rth. Accordingly, even when the length RL in the X axis direction of determination region 22 varies, a reversed image can be determined accurately.

<Second Modification to Reversed Image Determination Process>

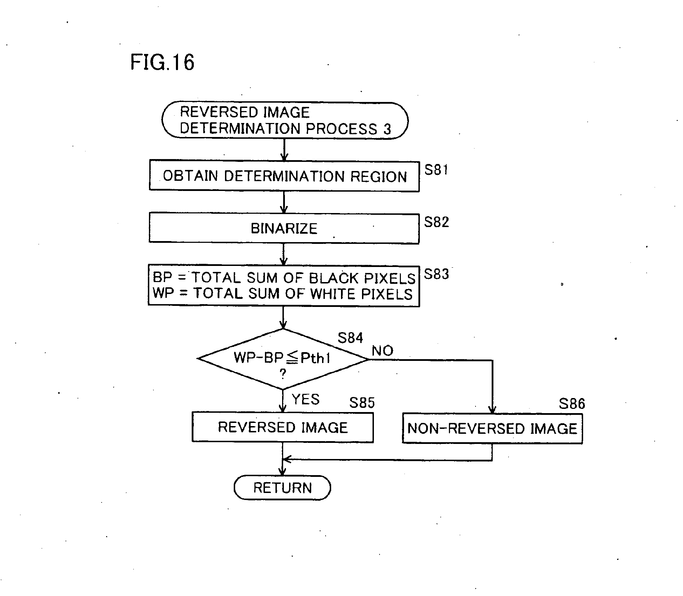

In accordance with an example of second modification to the reversed image determination process, it is determined whether or not an image in a determination region is a reversed image based on a total sum of the number of black pixels BP and a total sum of the number of white pixels WP in determination region 22. Fig. 16 is a flowchart showing the flow of the second modification to the reversed image determination process. Referring to Fig. 16, at step S81, an image in a determination region is obtained based on the determination region information stored in temporary storage unit 3. Then, the obtained image in the determination region is binarized (S82).

In the binarized image in the determination region, the total sum of the number of black pixels BP and the total sum of the number of white pixels WP are calculated (S83). Then, it is determined whether or not the difference between the total sum of the number of white pixels WP and the total sum of the number of black pixels BP is equal to or smaller than a threshold value Pth1 (S84). If true, the process goes on to step S85, and if false, the process goes on to step S86.

At step S85, it is set that the image in the determination region is a reversed image, and the process then ends. At step S86, it is set that the image in the determination region is a non-reversed image, and the process then ends.

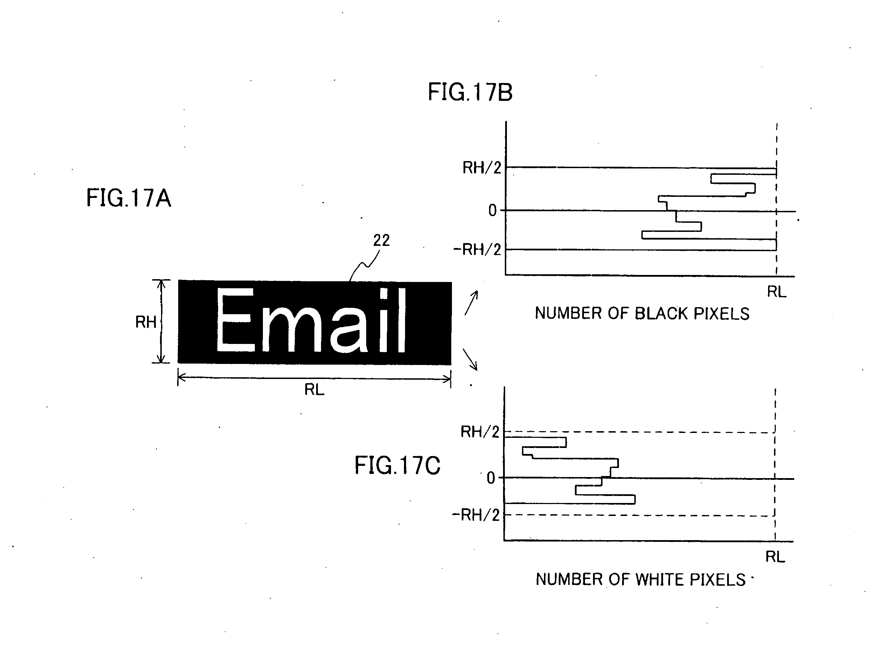

Figs. 17A to 17C arc diagrams showing the distribution of the number of black pixels and the number of white pixels in the determination region. Fig. 17A shows determination region 22, Fig. 17B shows a histogram of the number of black pixels for each line in determination region 22, and Fig. 17C shows a histogram of the number of white pixels for each line in determination region 22. As is clear from the comparison between Fig. 17B and Fig. 17C, the total sum of the number of black pixels is greater than the total sum of the number of white pixels. In such a case, determination region 22 is determined as a reversed image.

In the reversed image determination process in accordance with the second modification, whether or not a reversed image is formed is determined based on the number of black pixels and the number of white pixels included in the determination region, so that whether or not a reversed image is formed is determined easily only by counting the number of white pixels and the number of black pixels.

<Third Modification to Reversed Image Determination Process>

In the reversed image determination process in accordance with the example of the second modification, the difference between the number of black pixels and the number of white pixels in determination region 22 is compared with a threshold value in order to determine whether or not a reversed image is formed. In the reversed image determination process in accordance with an example of a third modification, however, whether or not a reversed image is formed is determined based on the ratio between the number of black pixels and the number of white pixels included in determination region 22.

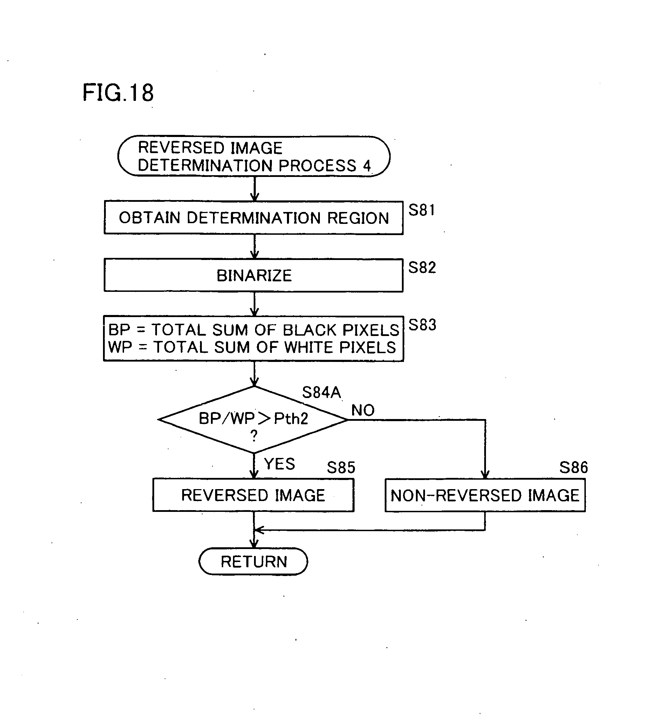

Fig. 18 is a flowchart showing a flow in the third modification of the reversed image determination process. It differs from the flow of the reversed image determination process in the second modification shown in Fig. 16 in that step S84 is changed to step S84A. The other steps are similar to those in the reversed image determination process in the second modification shown in Fig. 16, and therefore the description will not be repeated here.

At step S84A, the ratio (BP/WP) between the total sum of the number of black pixels BP and the total sum of the number of white pixels WP as obtained at step S83 is compared with a prescribed threshold value Pth2. If the ratio (BP/WP) of the total sum of the number of black pixels BP to the total sum of the number of white pixels WP is greater than threshold value Pth2, the process goes on to step S85, and if not, the process goes on to step S86.

In this way, whether or not a reversed image is formed is determined using the ratio between the number of black pixels and the number of white pixels, so that a fixed threshold value Pth 2 can be used irrespective of the size of the determination region. Therefore, even when the determination region varies in size, whether or not a reversed image is formed can be determined.

As described above, the image processing device in accordance with the present invention performs a reversed image determination process for prescribed image information using a run length by reversed image determination means. Therefore, in the image processing device in accordance with the present invention, a run length is used in the reversed image determination process, so that the reversed image determination process can be performed accurately even if characters occupy the major part of prescribed image information that is a determination region.

Furthermore, in the image processing device in accordance with the present invention, determination is made based on the ratio between a run length and a length of prescribed image information to be subjected to the reversed image determination process, so that the reversed image determination process can be performed accurately, irrespective of the size of the prescribed image information, even when characters occupy the majority part of the prescribed image information. For example, when the reversed image determination is performed on the image shown in Fig. 21 based on the number of pixels, black pixels occupy the major part of the image and it is therefore determined that the background is black. Accordingly, it is unfortunately determined that a reversed image is formed. In accordance with the present invention, however, a run length is used for determination. Since white runs with a run length of the image width appear, the background can be determined as white. As a result, it can be determined that a reversed image is not formed.

In addition, the image processing device in accordance with the present invention defines a partial region from image information, extracts a determination region based on the partial region by determination region extraction means, and performs the reversed image determination process on the determination region by reversed image determination means. Therefore, in the image processing device in accordance with the present invention, a determination region for determining whether a reversed image is formed or not is extracted by the determination region extraction means in order to perform a reversed image determination, so that an image determination process can be performed on a region requiring reversal processing. As a result, the number of pixels to be processed can be reduced, thereby increasing the processing speed.

In the image processing device in accordance with the present invention, the determination region extraction means resets a determination region based on a preset partial region. Therefore, extraction of a determination region can be performed properly for reversed regions of various sizes, so that the reversed image determination can be performed properly.

Moreover, in the image processing device in accordance with the present invention, the determination region extraction means extracts a strip-like region. As a reversed portion of characters and character strings in text is generally shaped like a strip, the use of the strip-like information can improve the efficiency of extraction of a character portion in an image.

In addition, in the image processing device in accordance with the present invention, the determination region extraction means extracts a region having a prescribed condition from the middle portion of a partial region using a histogram of the number of pixels each having an edge value equal to or greater than a prescribed value. Therefore, even when a preset partial region includes a region having a reversed image, a determination region can be extracted properly by using the histogram of the edge value of the region having the reversed image.

Furthermore, in the image processing device in accordance with the present invention, the determination region extraction means obtains a run length with respect to the axis in one direction of the orthogonal axes for the input partial region and extracts a region with a prescribed condition from the middle portion of a partial region. Therefore, even when a preset partial region includes a region having a reversed image, a determination region can be extracted properly by using the run length in the region having a reversed image.

Furthermore, the image processing device in accordance with the present invention uses white pixels and black pixels in the reversed image determination process. Therefore, the reversed image determination process can be realized in a simple configuration only by counting white pixels and black pixels.

In addition, the image processing device in accordance with the present invention defines a partial region from image information, extracts a determination region based on the partial region by determination region extraction means, and uses a run length to perform a reversed image determination process on the determination region by reversed image determination means. Therefore, in the image processing device in accordance with the present invention, the determination region extraction means extracts a determination region for determining whether or not a reversed image is formed, and the reversed image determination means performs a reversed image determination using a run length, so that the reversed image determination process can be performed only on a region requiring a determination process. Moreover, the image reversal process can be performed only on a region requiring reversal processing, irrespective of the size of the determination region, even when characters occupy the major part of the determination region.

A program recording medium in accordance with the present invention defines a partial region from image information, extracts a determination region for determining whether or not a reversed image is formed based on the partial region, and performs a reversed image determination on the determination region. Therefore, in the program recording medium in accordance with the present invention, the reversed image determination is performed by extracting a determination region for determining whether or not a reversed image is formed, so that an image can be reversed only in a region requiring reversal processing.

It should be understood that the embodiment disclosed herein is taken as illustrative and not restrictive in all respects. The scope of the present invention is indicated not by the foregoing description but by the claims, and all equivalencies within the scope of the claims and all changes within the scope are intended to be embraced.

## Claims

**1.** An image processing device comprising reversed image determination means (S51-S70) for determining from run lengths satisfying prescribed conditions, said run lengths being lengths of pixels of a same gray level being continuous, which is obtained by measuring said prescribed image information in a line direction, whether prescribed image information has an image in which a character having a gray level higher than at least that of a background is drawn or an image in which a character having a gray level lower than at least that of a background is drawn, wherein said reversed image determination is performed on a determination region,

**characterized in that** said reversed image determination means measures a run length along the line direction of said prescribed image information (S55) and determines whether or not a reversed image is formed based on whether the lines containing the run lengths satisfying the condition of minimal length form a block of adjacent lines, the image processing device further including:

binarization means (S52) for classifying a pixel value of a pixel included in said determination region into one of a first pixel and a second pixel;
the reversed image determination means:

determining a maximum number of first pixels being continuous in said line direction and a maximum number of second pixels being continuous in said line direction (S53);
comparing said maximum number of said first pixels and said maximum number of said second pixels with a threshold; and
scanning in the direction orthogonal to the line direction to determine whether the conditions that said maximum number of said first pixels is greater than said threshold (556) and that said maximum number of second pixels is greater than said threshold (557) hold true for a certain number of adjacent lines.

**2.** The image processing device according to claim 1, **characterized in that** said reversed image determination means measures a run length with respect to the line direction for said prescribed image information (S55) and obtains a ratio between said run length and a length of said prescribed image information corresponding to said line direction to determine whether or not a reversed image is formed based on whether lines containing ratios satisfying a minimum value form a block of adjacent lines (S56A, S57A, S58A).

3. An image processing device according to claim 1, further comprising:

determination region extraction means (S104) for defining a partial region of a prescribed size for image information based on a size of said image information and extracting a determination region based on said partial region; wherein
said reversed image determination means (S105) determines whether said determination region extracted by said determination region extraction means has an image in which a character having a gray level higher than at least that of a background is drawn or an image in which a character having a gray level lower than at least that of a background is drawn.

4. The image processing device according to claim 3, **characterized in that** said determination region extraction means resets a region including a region in a prescribed shape based on said partial region of a prescribed size (S02) and outputs said region as a determination region (S13).

5. The image processing device according to claim 3, **characterized in that** said determination region extraction means extracts a strip-like region based on said partial region (S22) of a prescribed size (S33) and outputs said region as a determination region.

6. The image processing device according to claim 3, **characterized in that** said determination region extraction means obtains a histogram of a number of pixels each having an edge value of at least a prescribed value with respect to the line direction for said partial region of a prescribed size (S04) and scans said histogram from a middle of said partial region to a + direction and to a - direction orthogonal to the line direction to extract as a determination region a region in which a variation in said histogram satisfies a prescribed condition (S 13).

7. The image processing device according to claim 3, **characterized in that** said determination region extraction means obtains a run length with respect to the line direction for said partial region of a prescribed size (S24) and scans said run length from a middle portion of said partial region to a + direction and to a - direction orthogonal to the line direction to extract as a determination region a region in which a variation in said run length satisfies a prescribed condition (S33).

8. The image processing device according to claim 3, wherein said reversed image determination means determines whether or not a reversed image is formed based on run lengths for the image information in said determination region (S56A, S57A, S58A).

9. An image processing device according to claim 1, further comprising:

means (1) for inputting an image;
determination region extraction means (S51) for extracting a determination region from said input image; wherein
said reversed image determination means (S56, S57, S58) counts a number of said first pixels or said second pixels included in said determination region being continuous in the line direction (S54) and scans the number of said first pixels and said second pixels being continuous in the direction orthogonal to said line direction (S55) to determine whether or not said image has a reversed character represented therein based on whether lines containing a continuous state of the number of said first pixels and the number of said second pixels satisfying the condition of minimal number form a block of adjacent lines.

10. An image processing device according to claim 1, further comprising:

input means (1) for inputting an image;
determination region extraction means (S51) for extracting the determination region from said input image; wherein
said reversed image determination means (S56A, S57A, S58A) scans a number of said first pixels or said second pixels or a ratio included in said determination region in the direction orthogonal to the line direction (S55) for determining whether or not an image has a reversed character represented therein based on whether lines containing a number of said first pixels and said second pixels or a ratio satisfying a minimum value form a block of adjacent lines.

11. The image processing device according to claim 9, wherein said determination means includes comparison means (S56) for comparing a number of said first pixels and a number of said second pixels being continuous with a first threshold value.

12. The image processing device according to claim 11, wherein said determination means determines that a reversed image is formed (S69) when a prescribed number of lines in which a number of said first pixels being continuous exceeds said first threshold value form a block of adjacent lines (YES at S56) and a prescribed number of lines in which a number of said second pixels being continuous exceeds said first threshold value do not form a block of adjacent lines (NO at S57).

13. The image processing device according to claim 12,
said determination means including maximum value comparison means (S61) for making a comparison between a maximum value of a number of said first pixels being continuous and a maximum value of a number of said second pixels being continuous when a prescribed number of lines in which a number of said first pixels being continuous exceeds said first threshold form a block of adjacent lines (YES at S56) and a prescribed number of lines in which a number of said second pixels being continuous exceeds said first threshold value form a block of adjacent lines (YES at S57), wherein
when said maximum value comparison means determines that said maximum value of the number of said first pixels being continuous is greater than said maximum value of the number of said second pixels being continuous, it is determined that a reversed image is formed.

14. The image processing device according to claim 9, wherein a histogram is created (S54) when counting a number of said first pixels or said second pixels included in said determination region being continuous in the line direction, and wherein said determination means includes comparison means (S56A, 57A, 58A) for comparing each of a first ratio between a number of said first pixels being continuous and a number of pixels arranged in the line direction of said determination region and a second ratio between a number of said second pixels being continuous and a number of pixels arranged in the line direction of said determination region with a second threshold value.

15. The image processing device according to claim 14, wherein said determination means determines that a reversed image is formed when a prescribed number of lines in which said first ratio exceeds said second threshold value form a block of adjacent lines (YES at S56A) and a prescribed number of lines in which said second ratio exceeds said second threshold value do no form a block of adjacent lines (NO at S57A).

16. The image processing device according to claim 15,
said determination means including maximum value comparison means (S61) for making a comparison between a maximum value of a number of said first pixels being continuous and a maximum value of a number of said second pixels being continuous when a prescribed number of lines in which said first ratio exceeds said second threshold value form a block of adjacent lines (YES at S56A) and a prescribed number of lines in which said second ratio exceeds said second threshold value form a block of adjacent lines (YES at S57A), wherein
when said maximum value comparison means determines that said maximum value of the number of said first pixels being continuous is greater than said maximum value of the number of said second pixels being continuous, it is determined that a reversed image is formed.

17. The image processing device according to claim 13 or claim 16,
said determination means further including total number comparison means (S65) for making a comparison between a total number of said first pixels and a total number of said second pixels when said maximum value comparison means determines that said maximum value of the number of said first pixels being continuous is equal to said maximum value of the number of said second pixels being continuous (= at S61), wherein
when it is determined that said total number of said first pixels is greater than said total number of said second pixels, said total number comparison means determines that a reversed image is formed.

18. The image processing device according to claim 9 or 10,
said determination region extraction means including character region extraction means (S01) for extracting a character region in which a character is represented from said input image, wherein
a rectangular region including at least a part of said extracted character region is extracted as a determination region (S02).

19. The image processing device according to claim 18,

said character region extraction means including

text region extraction means (S 101) for extracting a text region in which a character is represented from said input image, and

character array region extraction means (S102) for extracting a character array region in which a plurality of characters are arranged from said extracted text region, wherein

a character region including at least one character is extracted from said extracted character array region (S103).

**20.** The image processing device according to claim 18,

said determination region extraction means including

histogram creation means (S04) for creating a histogram of edge pixels counted in a longer-side direction of said character region,

scanning means (S26-S29) for scanning lines from a middle to each of two end portions in the direction orthogonal to the line parallel to a longer-side direction of said character region,

comparison means (S07, S11) for comparing a number of edge pixels included in said character region with a third threshold value or a fourth threshold value for each line, and

determination region decision means (S12) for deciding as a determination region a region specified by a line in which a number of edge pixels is greater than said fourth threshold value, after a prescribed number of lines in which a number of edge pixels is at most said third threshold value are continuous (YES at S10), when a line in which a number of edge pixels is at least said fourth threshold value is detected (YES at S11).

**21.** The image processing device according to claim 18,

said determination region extraction means including

histogram creating means (S24) for creating a histogram of said first pixels being continuous in a longer-side direction of said character region,

scanning means (S26-S29) for scanning lines from a middle to each of two end portions in the direction orthogonal to the line parallel to a longer-side direction of said character region,

comparison means (S27, S31) for comparing a number of said first pixels included in said character region being continuous with a fifth threshold value or a sixth threshold value for each line, and

determination region decision means (S32) for deciding as a determination region a region specified by a line in which a number of said first pixels being continuous is smaller than said sixth threshold value, after a prescribed number of lines in which a number of said first pixels being continuous is at least said fifth threshold value are continuous (YES at S30), when a line in which a number of said first pixels being continuous is smaller than said sixth threshold value is detected (YES at S31).

**22.** The image processing device according to claim 20 or 21, wherein said determination region decision means decides as a determination region a region sandwiched between two arbitrary straight lines orthogonal to a line direction (S13, S33).

**23.** A computer readable recording medium having an image processing program recorded thereon for performing a reversed image determination on a determination region by causing a computer to execute:

a determination region extraction step (S104) of defining a partial region of a prescribed size for image information based on a size of said image information and extracting said determination region based on said partial region; and

a reversed image determination step (S105) of determining whether the determination region extracted at said determination region extraction step has an image in which a character having a gray level higher than at least that of a background is drawn or an image in which a character having a gray level lower than at least that of a background is drawn, based on run lengths satisfying prescribed conditions, said run lengths being lengths of pixels of a same gray level being continuous, which is obtained by measuring said image information in a line direction,

**characterised in that** said reversed image determination step measures a run length along the line direction of said prescribed image information and determines whether or not a reversed image is formed based on whether the lines containing the run lengths satisfying the condition of minimal length form a block of adjacent lines,

the computer further executing:

a binarization step (S52) of classifying a pixel value of a pixel included in said determination region into one of a first pixel and a second pixel;

the reversed image determination step further including

determining a maximum number of first pixels being continuous in said line direction and a maximum number of second pixels being continuous in said line direction (S53);

comparing said maximum number of said first pixels and said maximum number of said second pixels with a threshold; and

scanning in the direction orthogonal to the line direction to determine whether the conditions that said maximum number of said first pixels is greater than said threshold (556) and that said maximum number of second pixels is greater than said threshold (557) hold true for a certain number of adjacent lines.

**24.** An image processing method comprising:

determination region extraction means (S104) for defining a partial region of a prescribed size for image information based on a size of said image information and extracting a determination region based on said partial region; and

reversed image determination means (S105) for determining whether the determination region extracted by said determination region extraction means has an image in which a character having a gray level higher than at least that of a background is drawn or an image in which a character having a gray level lower than at least that of a background is drawn, based on run lengths satisfying prescribed conditions, said run lengths being lengths of pixels of a same gray level being continuous, which is obtained by measuring said image information in a line direction, wherein

said reversed image determination is performed on said determination region,

**characterised in that** said reversed image determination means measures a run length along the line direction of said prescribed image information and determines whether or not a reversed image is formed based on whether the lines containing the run lengths satisfying the condition of minimal length form a block of adjacent lines,

the method further comprising:

a binarization means (S52) of classifying a pixel value of a pixel included in said determination region into one of a first pixel and a second pixel;

the reversed image determination means:

determining a maximum number of first pixels being continuous in said line direction and a maximum number of second pixels being continuous in said line direction (S53);

comparing said maximum number of said first pixels and said maximum number of said second pixels with a threshold; and

scanning in the direction orthogonal to the line direction to determine whether the conditions that said maximum number of said first pixels is greater than said threshold (556) and that said maximum number of second pixels is greater than said threshold (557) hold true for a certain number of adjacent lines.

**25.** An image processing program for performing a reversed image determination on a determination region by causing a computer to execute:

a determination region extraction step (S104) of defining a partial region of a prescribed size for image information based on a size of said image information and extracting said determination region based on said partial region; and

a reversed image determination step (S105) of determining whether said determination region extracted at said determination region extraction step has an image in which a character having a gray level higher than at least that of a background is drawn or an image in which a character having a gray level lower than at least that of a background is drawn, based on run lengths satisfying prescribed conditions, said run length being lengths of pixels of a same gray level being continuous, which is obtained by measuring said image information in a line direction,

**characterised in that** said reversed image determination step measures a run length along the line direction of said prescribed image information and determines whether or not a reversed image is formed based on whether the lines containing the run lengths satisfying the condition of minimal length form a block of adjacent lines,

the computer further executing:

a binarization step (S52) of classifying a pixel value of a pixel included in said determination region into one of a first pixel and a second pixel;

the reversed image determination step further including

determining a maximum number of first pixels being continuous in said line direction and a maximum number of second pixels being continuous in said line direction (S53);

comparing said maximum number of said first pixels and said maximum number of said second pixels with a threshold; and

scanning in the direction orthogonal to the line direction to determine whether the conditions that said maximum number of said first pixels is greater than said threshold (556) and that said maximum number of second pixels is greater than said threshold (557) hold true for a certain number of adjacent lines.

## Patentansprüche

1. Bildverarbeitungsvorrichtung, die Mittel (S51-S70) zum Bestimmen umgekehrter Bilder aus Lauflängen enthält, die vorgeschriebene Bedingungen erfüllen, wobei die Lauflängen Längen von Bildpunkten mit der gleichen Graustufe, die zusammenhängend sind, sind und durch das Messen der vorgeschriebenen Bildinformationen in einer Linienrichtung erhalten werden, sei es, dass die vorgeschriebenen Bildinformationen ein Bild besitzen, in dem ein Zeichen mit einer Graustufc, die höher als wenigstens die eines Hintergrunds ist, gezeichnet ist, oder ein Bild besitzen, in dem ein Zeichen mit einer Graustufe, die niedriger als wenigstens die eines Hintergrunds ist, gezeichnet ist, wobei die Bestimmung des umgekehrten Bildes in einem Bestimmungsbereich ausgeführt wird,
**dadurch gekennzeichnet, dass** die Mittel zum Bestimmen umgekehrter Bilder eine Lauflänge entlang der Linienrichtung der vorgeschriebenen Bildinformationen messen (S55) und darauf basierend, ob die Linien, die die Lauflängen enthalten, die die Bedingung einer minimalen Länge erfüllen, einen Block benachbarter Linien bilden, bestimmen, ob ein umgekehrtes Bild ausgebildet ist,
wobei die Bildverarbeitungsvorrichtung ferner enthält:

Binärisierungsmittel (S52) zum Klassifizieren eines Bildpunktwertes eines in dem Bestimmungsbereich enthaltenen Bildpunkt in einen ersten Bildpunkt und in einen zweiten Bildpunkt;
wobei die Mittel zum Bestimmen umgekehrter Bilder:

eine maximale Anzahl von ersten Bildpunkten, die zusammenhängend sind, in der Linienrichtung und eine maximale Anzahl von zweiten Bildpunkten, die zusammenhängend sind, in der Linienrichtung bestimmen (S53);
die maximale Anzahl der ersten Bildpunkte und die maximale Anzahl der zweiten Bildpunkte mit einem Schwellenwert vergleichen; und
in der Richtung, die zu der Linienrichtung orthogonal ist, abtasten, um zu bestimmen, ob die Bedingungen, dass die maximale Anzahl der ersten Bildpunkte größer als der Schwellenwert ist (556) und dass die maximale Anzahl
der zweiten Bildpunkte größer als der Schwellenwert ist (557), für eine bestimmte Anzahl von benachbarten Linien gelten.

2. Bildverarbeitungsvorrichtung nach Anspruch 1, **dadurch gekennzeichnet, dass** die Mittel zum Bestimmen umgekehrter Bilder eine Lauflänge bezüglich der Linienrichtung für die vorgeschriebenen Bildinformationen messen (S55) und ein Verhältnis zwischen der Lauflänge und einer Länge der vorgeschriebenen Bildinformationen, die der Linienrichtung entspricht, erhalten, um basierend darauf, ob die Linien, die die Verhältnisse enthalten, die einem minimalen Wert entsprechen, einen Block benachbarter Linien bilden, zu bestimmen, ob ein umgekehrtes Bild ausgebildet ist (S56A, S57A, S58A).

3. Bildverarbeitungsvorrichtung nach Anspruch 1, die ferner enthält:

Bestimmungsbereich-Extraktionsmittel (S104) zum Definieren eines Teilbereichs mit einer vorgeschriebenen Größe für die Bildinformationen basierend auf einer Größe der Bildinformationen und Extrahieren eines Bestimmungsbereichs basierend auf dem Teilbereichs; wobei
die Mittel (S105) zum Bestimmen umgekehrter Bilder bestimmen, ob der durch die Bestimmungsbereich-Extraktionsmittel extrahierte Bestimmungsbereich ein Bild besitzt, in dem ein Zeichen mit einer Graustufe, die höher als wenigstens die eines Hintergrunds ist, gezeichnet ist, oder ein Bild besitzt, in dem ein Zeichen mit einer Graustufe, die niedriger als wenigstens die eines Hintergrunds ist, gezeichnet ist.

4. Bildverarbeitungsvorrichtung nach Anspruch 3, **dadurch gekennzeichnet, dass** die Bestimmungsbereich-Extraktionsmittel einen Bereich, der einen Bereich in einer vorgeschriebenen Form enthält, basierend auf dem Teilbereich mit einer vorgeschriebenen Größe zurücksetzen (S02) und den Bereich als einen Bestimmungsbereich ausgeben (S13).

5. Bildverarbeitungsvorrichtung nach Anspruch 3, **dadurch gekennzeichnet, dass** die Bestimmungsbereich-Extraktionsmittel einen streifenähnlichen Bereich basierend auf dem Teilbereich (S22) mit einer vorgeschriebenen Größe (S33) extrahieren und den Bereich als einen Bestimmungsbereich ausgeben.

6. Bildverarbeitungsvorrichtung nach Anspruch 3, **dadurch gekennzeichnet, dass** die Bestimmungsbereich-Extraktionsmittel ein Histogramm einer Anzahl von Bildpunkten, wovon jeder einen Randwert mit wenigstens einem vorgeschriebenen Wert besitzt, bezüglich der Linienrichtung für den Teilbereich mit einer vorgeschriebenen Größe erhalten (SO4) und das Histogramm von einer Mitte des Teilbereichs in einer +-Richtung und in einer --Richtung, die zu der Linienrichtung orthogonal sind, abtasten, um einen Bereich, in dem eine Variation in dem Histogramm eine vorgeschriebene Bedingung erfüllt, als einen Bestimmungsbereich zu extrahieren (S13).

7. Bildverarbeitungsvorrichtung nach Anspruch 3, **dadurch gekennzeichnet, dass** die Bestimmungsbereich-Extraktionsmittel eine Lauflänge bezüglich der Linienrichtung für den Teilbereich mit einer vorgeschriebenen Größe erhalten (S24) und die Lauflänge von einem Mittelabschnitt des Teilbereichs in einer +-Richtung und in einer --Richtung, die zu der Linienrichtung orthogonal sind, abtasten, um einen Bereich, in dem eine Variation in der Lauflänge eine vorgeschriebene Bedingung erfüllt, als einen Bestimmungsbereich zu extrahieren (S33).

8. Bildverarbeitungsvorrichtung nach Anspruch 3, wobei die Mittel zum Bestimmen umgekehrter Bilder basierend auf den Lauflänge für die Bildinformationen in dem Bestimmungsbereich bestimmen, ob ein umgekehrtes Bild ausgebildet ist (S56A, S57A, S58A).

9. Bildverarbeitungsvorrichtung nach Anspruch 1, die ferner enthält:

Mittel (1) zum Eingeben eines Bildes;
Bestimmungsbereich-Extraktionsmittel (S51) zum Extrahieren eines Bestimmungsbereichs aus dem eingegebenen Bild; wobei
die Mittel (S56, S57, S58) zum Bestimmen umgekehrter Bilder eine Anzahl der ersten Bildpunkte oder der zweiten Bildpunkte, die in dem Bestimmungsbereich enthalten sind und in der Linienrichtung zusammenhängend sind, zählen (S54) und die Anzahl der ersten Bildpunkte und der zweiten Bildpunkte, die zusammenhängend sind, in der Richtung, die zu der Linienrichtung orthogonal ist, abtasten (S55), um basierend darauf, ob die Linien, die einen zusammenhängenden Zustand der Anzahl der ersten Bildpunkte und der Anzahl der zweiten Bildpunkte, die die Bedingung der minimalen Anzahl erfüllen, enthalten, einen Block benachbarter Linien bilden, zu bestimmten, ob in dem Bild ein umgekehrtes Zeichen dargestellt ist.

10. Bildverarbeitungsvorrichtung nach Anspruch 1, die ferner enthält:

Eingabemittel (1) zum Eingeben eines Bildes;
Bestimmungsbereich-Extraktionsmittel (S51) zum Extrahieren des Bestimmungsbereichs aus dem eingegebenen Bild; wobei
die Mittel (S56A, S57A, S58A) zum Bestimmen umgekehrter Bilder eine Anzahl der ersten Bildpunkte oder der zweiten Bildpunkte oder ein Verhältnis, die in dem Bestimmungsbereich enthalten sind, in der Richtung, die zu der Linienrichtung orthogonal ist, abtasten (S55), um basierend darauf, ob die Linien, die eine Anzahl der ersten Bildpunkte und der zweiten Bildpunkte oder ein Verhältnis, die einem minimalen Wert entsprechen, enthalten, einen Block benachbarter Linien bilden, zu bestimmen, ob in einem Bild ein umgekehrtes Zeichen dargestellt ist.

11. Bildverarbeitungsvorrichtung nach Anspruch 9, wobei die Bestimmungsmittel Vergleichsmittel (S56) zum Vergleichen einer Anzahl der ersten Bildpunkte und einer Anzahl der zweiten Bildpunkte, die zusammenhängend sind, mit einem ersten Schwellenwert enthalten.

12. Bildverarbeitungsvorrichtung nach Anspruch 11, wobei die Bestimmungsmittel bestimmen, dass ein umgekehrtes Bild ausgebildet ist, (S69), wenn eine vorgeschriebene Anzahl von Linien, in denen eine Anzahl der ersten Bildpunkte, die zusammenhängend sind, einen ersten Schwellenwert übersteigt, einen Block benachbarter Linien bildet (ja im S56) und eine vorgeschriebene Anzahl von Linien, in denen eine Anzahl der zweiten Bildpunkte, die zusammenhängend sind, den ersten Schwellenwert übersteigt, keinen Block benachbarter Linien bildet (nein im S57).

13. Bildverarbeitungsvorrichtung nach Anspruch 12,
wobei die Bestimmungsmittel Maximalwert-Vergleichsmittel (S61) zum Ausführen eines Vergleichs zwischen einem Maximalwert einer Anzahl der ersten Bildpunkte, die zusammenhängend sind, und einem Maximalwert einer Anzahl der zweiten Bildpunkte, die zusammenhängend sind, enthält, wenn eine vorgeschriebene Anzahl von Linien, in denen eine Anzahl der ersten Bildpunkte, die zusammenhängend sind, den ersten Schwellenwert übersteigt, einen Block benachbarter Linien bildet (ja im S56) und eine vorgeschriebene Anzahl von Linien, in denen eine Anzahl der zweiten Bildpunkte, die zusammenhängend sind, den ersten Schwellenwert übersteigt, einen Block benachbarter Linien bildet (ja im S57), wobei
wenn die Maximalwert-Vergleichsmittel bestimmen, dass der Maximalwert der Anzahl der ersten Bildpunkte, die zusammenhängend sind, größer als der Maximalwert der Anzahl der zweiten Bildpunkte, die zusammenhängend sind, ist, bestimmt wird, dass ein umgekehrtes Bild ausgebildet ist.

14. Bildverarbeitungsvorrichtung nach Anspruch 9, wobei ein Histogramm erzeugt wird (S54), wenn eine Anzahl der ersten Bildpunkte oder der zweiten Bildpunkte, die in dem Bestimmungsbereich enthalten sind und die zusammenhängend sind, in der Linienrichtung gezählt wird, und wobei die Bestimmungsmittel Vergleichsmittel (S56A, 57A, 58A) zum Vergleichen sowohl eines ersten Verhältnisses zwischen einer Anzahl der ersten Bildpunkte, die zusammenhängend sind, und einer Anzahl der Bildpunkte, die in der Linienrichtung des Bestimmungsbereichs angeordnet sind, als auch eines zweiten Verhältnisses zwischen einer Anzahl der zweiten Bildpunkte, die zusammenhängend sind, und einer Anzahl der Bildpunkte, die in der Linienrichtung des Bestimmungsbereichs angeordnet sind, mit einem zweiten Schwellenwert enthalten.

15. Bildverarbeitungsvorrichtung nach Anspruch 12, wobei die Bestimmungsmittel bestimmen, dass ein umgekehrtes Bild ausgebildet ist, wenn eine vorgeschriebene Anzahl von Linien, in denen das erste Verhältnis den zweiten Schwellenwert übersteigt, einen Block benachbarter Linien bildet (ja im S56A) und eine vorgeschriebene Anzahl von Linien, in denen das zweite Verhältnis den zweiten Schwellenwert übersteigt, keinen Block benachbarter Linien bildet (nein im S57A).

16. Bildverarbeitungsvorrichtung nach Anspruch 15,
wobei die Bestimmungsmittel Maximalwert-Vergleichsmittel (S61) zum Ausführen eines Vergleichs zwischen einem Maximalwert einer Anzahl der crsten Bildpunkte, die zusammenhängend sind, und einem Maximalwert einer Anzahl der zweiten Bildpunkte, die zusammenhängend sind, wenn eine vorgeschriebene Anzahl von Linien, in denen das erste Verhältnis den zweiten Schwellenwert übersteigt, einen Block benachbarter Linien bildet (ja im S56A) und eine vorgeschriebene Anzahl von Linien, in denen das zweite Verhältnis den zweiten Schwellenwert übersteigt, einen Block benachbarter Linien bildet (ja im S57A), enthalten, wobei
wenn die Maximalwert-Vergleichsmittel bestimmen, dass der Maximalwert der Anzahl der ersten Bildpunkte, die zusammenhängend sind, größer als der Maximalwert der Anzahl der zweiten Bildpunkte, die zusammenhängend sind, ist, bestimmt wird, dass ein umgekehrtes Bild ausgebildet ist.

17. Bildverarbeitungsvorrichtung nach Anspruch 13 oder Anspruch 16,
wobei die Bestimmungsmittel ferner Gesamtzahl-Vergleichsmittel (S65) zum Ausführen eines Vergleichs zwischen einer Gesamtzahl der ersten Bildpunkte und einer Gesamtzahl der zweiten Bildpunkte, wenn die Maximalwert-Vergleichsmittel bestimmen, dass der Maximalwert der Anzahl der ersten Bildpunkte, die zusammenhängend sind, gleich dem Minimalwert der Anzahl der zweiten Bildpunkte, die zusammenhängend sind, ist (≃ im S61), enthalten, wobei
wenn bestimmt wird, dass die Gesamtzahl der ersten Bildpunkte größer als die Gesamtzahl der zweiten Bildpunkte ist, die Gesamtzahl-Vergleichsmittel bestimmen, dass ein umgekehrtes Bild ausgebildet ist.

18. Bildverarbeitungsvorrichtung nach Anspruch 9 oder 10,
wobei die Bestimmungsbereich-Extraktionsmittel Zeichenbereich-Extraktionsmittel (SO1) zum Extrahieren eines Zeichenbereichs, in dem ein Zeichen dargestellt ist, aus dem eingegebenen Bild enthalten, wobei
ein rechteckiger Bereich, der wenigstens einen Teil des extrahierten Zeichenbereichs enthält, als ein Bestimmungsbereich extrahiert wird (SO2).

19. Bildverarbeitungsvorrichtung nach Anspruch 18,
wobei die Zeichenbereich-Extraktionsmittel enthalten Textbereich-Extraktionsmittel (S101) zum Extrahieren eines Textbereichs, in dem ein Zeichen dargestellt ist, aus dem eingegebenen Bild, und

Zeichenfeldbereich-Extraktionsmittel (S102) zum Extrahieren eines Zeichenfeldbereichs, in dem mehrere Zeichen angeordnet sind, aus dem extrahierten Textbereich, wobei ein Zeichenbereich, der wenigstens ein Zeichen enthält, aus dem extrahierten Zeichenfeldbereich extrahiert wird (S103).

20. Bildverarbeitungsvorrichtung nach Anspruch 18, wobei die Bestimmungsbereich-Extraktionsmittel enthalten Histogrammerzeugungsmittel (S04) zum Erzeugen eines Histogramms der in einer Richtung einer längeren Seite des Zeichenbereichs gezählten Randbildpunkte, Abtastmittel (S26-S29) zum Abtasten von Linien von einer Mitte zu jedem von zwei Endabschnitten in der Richtung, die zu der Linie orthogonal ist, die zu einer Richtung einer längeren Seite des Zeichenbereichs parallel ist, Vergleichsmittel (S07, S11) zum Vergleichen einer Anzahl der Randbildpunkte, die in dem Zeichenbereich enthalten sind, mit einem dritten Schwellenwert oder einem vierten Schwellenwert für jede Linie und Bestimmungsbereich-Entscheidungsmittel (S12) zum Bestimmen eines Bereichs, der durch eine Linie spezifiziert ist, in der eine Anzahl der Randbildpunkte größer als der vierte Schwellenwert ist, als einen Bestimmungsbereich, nachdem eine vorgeschriebene Anzahl von Linien, in denen eine Anzahl der Randbildpunkte höchstens gleich dem dritten Schwellenwert ist, zusammenhängend ist (ja im S10), wenn eine Linie, in der eine Anzahl der Randbildpunkte wenigstens gleich dem vierten Schwellenwert ist, detektiert wird (ja im S11).

21. Bildverarbeitungsvorrichtung nach Anspruch 18, wobei die Bestimmungsbereich-Extraktionsmittel enthalten Histogrammerzeugungsmittel (S24) zum Erzeugen eines Histogramms der ersten Bildpunkte, die zusammenhängend sind, in einer Richtung einer längeren Seite des Zeichenbereichs, Abtastmittel (S26-S29) zum Abtasten von Linien von einer Mitte zu jedem von zwei Endabschnitten in der Richtung, die zu der Linie orthogonal ist, die zu einer Richtung einer längeren Seite des Zeichenbereichs parallel ist, vergleichsmittel (S27, S31) zum Vergleichen einer Anzahl der ersten Bildpunkte, die in dem Zeichenbereich enthalten sind und die zusammenhängend sind, mit einem fünften Schwellenwert oder einem sechsten Schwellenwert für jede Linie, und Bestimmungsbereich-Entscheidungsmittel (S32) zum Bestimmen eines Bereichs, der durch eine Linie spezifiziert ist, in der eine Anzahl der ersten Bildpunkte, die zusammenhängend sind, kleiner als der sechste Schwellenwert ist, nachdem eine vorgeschriebene Anzahl von Linien, in denen eine Anzahl der ersten Bildpunkte, die zusammenhängend sind, wenigstens gleich dem fünften Schwellenwert ist, zusammenhängend ist (ja im S30), als einen Bestimmungsbereich, wenn eine Linie, in der eine Anzahl der ersten Bildpunkte, die zusammenhängend sind, kleiner als der sechste Schwellenwert ist, detektiert wird (ja im S31).

22. Bildverarbeitungsvorrichtung nach Anspruch 20 oder 21, wobei die Bestimmungsbereich-Entscheidungsmittel einen Bereich, der zwischen zwei beliebigen Geraden, die zu einer Linienrichtung orthogonal sind, angeordnet ist, als einen Bestimmungsbereich bestimmen (S13, S33).

23. Computerlesbares Aufzeichnungsmedium, auf dem ein Bildverarbeitungsprogramm aufgezeichnet ist, um eine Bestimmung umgekehrter Bilder in einem Bestimmungsbereich auszuführen, indem ein Computer veranlasst wird, auszuführen:

einen Bestimmungsbereich-Extraktionsschritt (S104) des Definierens eines Teilbereichs mit einer vorgeschriebenen Größe für die Bildinformationen basierend auf einer Größe der Bildinformationen und des Extrahierens eines Bestimmungsbereichs basierend auf dem Teilbereich; und einen Schritt (S105) des Bestimmens von umgekehrten Bildern des Bestimmens, ob der in dem Bestimmungsbereich-Extraktionsschritt extrahierte Bestimmungsbereich ein Bild besitzt, in dem ein Zeichen mit einer Graustufe, die höher als wenigstens die eines Hintergrunds ist, gezeichnet ist, oder ein Bild besitzt, in dem ein Zeichen mit einer Graustufe, die niedriger als wenigstens die eines Hintergrunds ist, gezeichnet ist, basierend auf den Lauflängen, die vorgeschriebene Bedingungen erfüllen, wobei die Lauflängen Längen von Bildpunkten mit der gleichen Graustufe, die zusammenhängend sind, sind und durch das Messen der Bildinformationen in einer Linienrichtung erhalten werden, **dadurch gekennzeichnet, dass** der Schritt des Bestimmens von umgekehrten Bildern eine Lauflänge entlang der Linienrichtung der vorgeschriebenen Bildinformationen misst und darauf basierend, ob die Linien, die die Lauflängen enthalten, die die Bedingung einer minimalen Länge erfüllen, einen Block benachbarter Linien bilden, bestimmt, ob ein umgekehrtes Bild ausgebildet ist, wobei der Computer ferner ausführt:

einen Binärisierungsschritt (S52) des Klassifizierens eines Bildpunktwertes eines in dem Bestimmungsbereich enthaltenen Bildpunkts in einen ersten Bildpunkt und in einen zweiten Bildpunkt;

wobei der Schritt des Bestimmens umgekehrter Bilder ferner enthält

Bestimmen einer maximalen Anzahl der ersten Bildpunkte, die zusammenhängend sind, in der Linienrichtung und einer maximalen Anzahl der zweiten Bildpunkte, die zusammenhängend sind, in der Linienrichtung (S53);

Vergleichen der maximalen Anzahl der ersten Bildpunkte und der maximalen Anzahl der zweiten Bildpunkte mit einem Schwellenwert; und

Abtasten in der Richtung, die zu der Linienrichtung orthogonal ist, um zu bestimmen, ob die Bedingungen, dass die maximale Anzahl der ersten Bildpunkte größer als der Schwellenwert ist (556) und dass die maximale Anzahl der zweiten Bildpunkte größer als der Schwellenwert ist (557), für eine bestimmte Anzahl von benachbarten Linien gelten.

24. Bildverarbeitungsverfahren, das enthält:

Bestimmungsbereich-Extraktionsmittel (S104) zum Definieren eines Teilbereichs mit einer vorgeschriebenen Größe für die Bildinformationen basierend auf einer Größe der Bildinformationen und Extrahieren eines Bestimmungsbereichs basierend auf dem Teilbereich; und

Mittel (S105) zum Bestimmen umgekehrter Bilder zum Bestimmen, ob der durch die Bestimmungsbereich-Extraktionsmittel extrahierte Bestimmungsbereich ein Bild besitzt, in dem ein Zeichen mit einer Graustufe, die höher als wenigstens die eines Hintergrunds ist, gezeichnet ist, oder ein Bild besitzt, in dem ein Zeichen mit einer Graustufe, die niedriger als wenigstens die eines Hintergrunds ist, gezeichnet ist, basierend auf den Lauflängen, die vorgeschriebene Bedingungen erfüllen, wobei die Lauflängen Längen von Bildpunkten mit der gleichen Graustufe, die zusammenhängend sind, sind und durch das Messen der Bildinformationen in einer Linienrichtung erhalten werden, wobei

die Bestimmung umgekehrter Bilder in dem Bestimmungsbereich ausgeführt wird,

**dadurch gekennzeichnet, dass** die Mittel zum Bestimmen umgekehrter Bilder eine Lauflänge entlang der Linienrichtung der vorgeschriebenen Bildinformationen messen und basierend darauf, ob die Linien, die die Lauflängen enthalten, die die Bedingung einer minimalen Länge erfüllen, einen Block benachbarter Linien bilden, bestimmen, ob ein umgekehrtes Bild ausgebildet ist,

wobei das Verfahren ferner enthält:

Binärisierungsmittel (S52) zum Klassifizieren eines Bildpunktwertes eines in dem Bestimmungsbercich enthaltenen Bildpunkts in einen ersten Bildpunkt und in einen zweiten Bildpunkt;

wobei die Mittel zum Bestimmen umgekehrter Bilder:

eine maximale Anzahl der ersten Bildpunkte, die zusammenhängend sind, in der Linienrichtung und eine maximale Anzahl der zweiten Bildpunkte, die zusammenhängend sind, in der Linienrichtung bestimmen (S53);

die maximale Anzahl der ersten Bildpunkte und die maximale Anzahl der zweiten Bildpunkte mit einem Schwellenwert vergleichen; und

in der Richtung, die zu der Linienrichtung orthogonal ist, abtasten, um zu bestimmen, ob die Bedingungen, dass die maximale Anzahl der ersten Bildpunkte größer als der Schwellenwert ist (556) und dass die maximale Anzahl der zweiten Bildpunkte größer als der Schwellenwert ist (557), für eine bestimmte Anzahl von benachbarten Linien gelten.

25. Bildverarbeitungsprogramm zum Ausführen einer Bestimmung umgekehrter Bilder in einem Bestimmungsbereich, indem ein Computer veranlasst wird, auszuführen:

einen Bestimmungsbereich-Extraktionsschritt (S104) des Definierens eines Teilbereichs mit einer vorgeschriebenen Größe für die Bildinformationen basierend auf einer Größe der Bildinformationen und des Extrahierens des Bestimmungsbereichs basierend auf dem Teilbereich; und

einen Schritt (S105) des Bestimmens von umgekehrten Bildern des Bestimmens, ob der in dem Bestimmungsbereich-Extraktionsschritt extrahierte Bestimmungsbereich ein Bild besitzt, in dem ein Zeichen mit einer Graustufe, die höher als wenigstens die eines Hintergrund ist, gezeichnet ist, oder ein Bild besitzt, in dem ein Zeichen mit einer Graustufe, die niedriger als wenigstens die

eines Hintergrunds ist, gezeichnet ist, basierend auf den Lauflängen, die vorgeschriebene Bedingungen erfüllen, wobei die Lauflängen Längen von Bildpunkten mit der gleichen Graustufe, die zusammenhängend sind, sind und durch das Messen der Bildinformationen in einer Linienrichtung erhalten werden,

**dadurch gekennzeichnet, dass** der Schritt des Bestimmens von umgekehrten Bildern eine Lauflänge entlang der Linienrichtung der vorgeschriebenen Bildinformationen misst und darauf basierend, ob die Linien, die die Lauflängen enthalten, die die Bedingung einer minimalen Länge erfüllen, einen Block benachbarter Linien bilden, bestimmt, ob ein umgekehrtes Bild ausgebildet ist,

wobei der Computer ferner ausführt:

einen Binärisierungsschritt (S52) des klassifizierens eines Bildpunktwertes eines in dem Bestimmungsbereich enthaltenen Bildpunkts in einen ersten Bildpunkt und in einen zweiten Bildpunkt;

wobei der Schritt zum Bestimmen umgekehrter Bilder ferner enthält

Bestimmen einer maximalen Anzahl der ersten Bildpunkte, die zusammenhängend sind, in der Linienrichtung und einer maximalen Anzahl der zweiten Bildpunkte, die zusammenhängend sind, in der Linienrichtung (S53);

Vergleichen der maximalen Anzahl der ersten Bildpunkte und der maximalen Anzahl der zweiten Bildpunkte mit einem Schwellenwert; und

Abtasten in der Richtung, die zu der Linienrichtung orthogonal ist, um zu bestimmen, ob die Bedingungen, dass die maximale Anzahl der ersten Bildpunkte größer als der Schwellenwert ist (556) und dass die maximale Anzahl der zweiten Bildpunkte größer als der Schwellenwert ist (557), für eine bestimmte Anzahl von benachbarten Linien gelten.

## Revendications

1. Dispositif de traitement d'image comprenant un moyen de détermination d'image inversée (S51-S70) pour déterminer, à partir de longueurs de passage respectant des conditions prescrites, lesdites longueurs de passage étant des longueurs de pixels d'un même niveau de gris étant continus, qui est obtenu en mesurant lesdites informations d'image prescrites dans une direction de ligne, si des informations d'image prescrites possèdent une image dans laquelle un caractère comportant un niveau de gris supérieur à au moins celui d'un arrière-plan est tracé ou une image dans laquelle un caractère comportant un niveau de gris inférieur à au moins celui d'un arrière-plan est tracé, dans lequel ladite détermination d'image inversée est effectuée sur une région de détermination,

**caractérisé en ce que** ledit moyen de détermination d'image inversée mesure une longueur de passage dans la direction de ligne desdites informations d'image prescrites (S55) et détermine si une image inversée est formée ou pas selon que les lignes contenant les longueurs de passage respectant la condition de longueur minimale forment ou pas un bloc de lignes adjacentes,

le dispositif de traitement d'image comprenant en outre :

un moyen de binarisation (S52) pour classer une valeur de pixel d'un pixel compris dans ladite région de détermination dans l'un d'un premier pixel et d'un deuxième pixel ;

le moyen de détermination d'image inversée étant destiné à :

déterminer un nombre maximal de premiers pixels étant continus dans ladite direction de ligne et un nombre maximal de deuxièmes pixels étant continus dans ladite direction de ligne (S53) ;

comparer ledit nombre maximal desdits premiers pixels et ledit nombre maximal desdits deuxièmes pixels à un seuil ; et

balayer dans la direction orthogonale à la direction de ligne pour déterminer si les conditions que ledit nombre maximal desdits premiers pixels soit supérieur audit seuil (556) et ledit nombre maximal desdits deuxièmes pixels soit supérieur audit seuil (557) sont respectées pour un certain nombre de lignes adjacentes.

2. Dispositif de traitement d'image selon la revendication 1, **caractérisé en ce que** ledit moyen de détermination d'image inversée mesure une longueur de passage par rapport à la direction de ligne pour lesdites informations d'image prescrites (S55) et obtient un rapport entre ladite longueur de passage et une longueur desdites informations d'image prescrites correspondant à ladite direction de ligne pour déterminer si une image inversée est formée ou pas selon que les lignes contenant des rapports respectant une valeur minimale forment ou pas un bloc de lignes adjacentes (S56A, S57A, S58A).

3. Dispositif de traitement d'image selon la revendication 1, comprenant en outre :

un moyen d'extraction de région de détermination (S104) pour définir une région partielle d'une taille prescrite pour des informations d'image sur la base d'une taille desdites informations d'image et extraire une région de détermination sur la base de ladite région partielle ; dans lequel

ledit moyen de détermination d'image inversée (S105) détermine si ladite région de détermination extraite par ledit moyen d'extraction de région de détermination possède une image dans laquelle un caractère comportant un niveau de gris supérieur à au moins celui d'un arrière-plan est tracé ou une image dans laquelle un caractère comportant un niveau de gris inférieur à au moins celui d'un arrière-plan est tracé.

4. Dispositif de traitement d'image selon la revendication 3, **caractérisé en ce que** ledit moyen d'extraction de région de détermination réinitialise une région comprenant une région d'une forme prescrite sur la base de ladite région partielle d'une taille prescrite (S02) et délivre ladite région en tant que région de détermination (S13).

5. Dispositif de traitement d'image selon la revendication 3, **caractérisé en ce que** ledit moyen d'extraction de région de détermination extrait une région en forme de bande sur la base de ladite région partielle (S22) d'une taille prescrite (S33) et délivre ladite région en tant que région de détermination.

6. Dispositif de traitement d'image selon la revendication 3, **caractérisé en ce que** ledit moyen d'extraction de région de détermination obtient un histogramme d'un nombre de pixels comportant chacun une valeur de bord d'au moins une valeur prescrite par rapport à la direction de ligne pour ladite région partielle d'une taille prescrite (S04) et balaye ledit histogramme depuis un milieu de ladite région partielle dans une direction + et dans une direction - orthogonales à la direction de ligne pour extraire en tant que région de détermination une région dans laquelle une variation dudit histogramme respecte une condition prescrite (S13).

7. Dispositif de traitement d'image selon la revendication 3, **caractérisé en ce que** ledit moyen d'extraction de région de détermination obtient une longueur de passage par rapport à la direction de ligne pour ladite région partielle d'une taille prescrite (S24) et balaye ladite longueur de passage depuis une partie de milieu de ladite région partielle dans une direction + et dans une direction - orthogonales à la direction de ligne pour extraire, en tant que région de détermination, une région dans laquelle une variation de ladite longueur de passage respecte une condition prescrite (S33).

8. Dispositif de traitement d'image selon la revendication 3, dans lequel ledit moyen de détermination d'image inversée détermine si une image inversée est formée ou pas sur la base de longueurs de passage pour les informations d'image dans ladite région de détermination (S56A, S57A, S58A).

9. Dispositif de traitement d'image selon la revendication 1, comprenant en outre :

un moyen (1) pour entrer une image ;
un moyen d'extraction de région de détermination (S51) pour extraire une région de détermination de ladite image entrée ; dans lequel
ledit moyen de détermination d'image inversée (S56, S57, S58) compte un nombre desdits premiers pixels ou desdits deuxièmes pixels compris dans ladite région de détermination étant continus dans la direction de ligne (S54) et balaye le nombre desdits premiers pixels et desdits deuxièmes pixels étant continus dans la direction orthogonale à ladite direction de ligne (S55) pour déterminer si ladite image possède ou pas un caractère inversé représenté dans celle-ci selon que les lignes contenant un état continu du nombre desdits premiers pixels et du nombre desdits deuxièmes pixels respectant la condition de nombre minimal forment ou pas un bloc de lignes adjacentes.

10. Dispositif de traitement d'image selon la revendication 1, comprenant en outre :

un moyen d'entrée (1) pour entrer une image ;
un moyen d'extraction de région de détermination (S51) pour extraire la région de détermination de ladite image entrée ; dans lequel
ledit moyen de détermination d'image inversée (S56A, S57A, S58A) balaye un nombre desdits premiers pixels et desdits deuxièmes pixels ou un rapport compris dans ladite région de détermination dans la direction orthogonale à la direction de ligne (S55) pour déterminer si une image possède ou pas un caractère inversé représenté dans celle-ci selon que les lignes contenant un nombre desdits premiers pixels et desdits deuxièmes pixels ou un rapport respectant une valeur minimale forment ou pas un bloc de lignes adjacentes.

11. Dispositif de traitement d'image selon la revendication 9, dans lequel ledit moyen de détermination comprend un moyen de comparaison (S56) pour comparer un nombre desdits premiers pixels et un nombre desdits deuxièmes pixels étant continus à une première valeur de seuil.

**12.** Dispositif de traitement d'image selon la revendication 11, dans lequel ledit moyen de détermination détermine qu'une image inversée est formée (S69) lorsqu'un nombre prescrit de lignes dans lesquelles un nombre desdits premiers pixels étant continus dépasse ladite première valeur de seuil forment un bloc de lignes adjacentes (OUI à S56) et un nombre prescrit de lignes dans lesquelles un nombre desdits deuxièmes pixels étant continus dépasse ladite première valeur de seuil ne forment pas un bloc de lignes adjacentes (NON à S57).

**13.** Dispositif de traitement d'image selon la revendication 12,
ledit moyen de détermination comprenant un moyen de comparaison de valeur maximale (S61) pour effectuer une comparaison entre une valeur maximale d'un nombre desdits premiers pixels étant continus et une valeur maximale d'un nombre desdits deuxièmes pixels étant continus lorsqu'un nombre prescrit de lignes dans lesquelles un nombre desdits premiers pixels étant continus dépasse ladite première valeur de seuil forment un bloc de lignes adjacentes (OUI à S56) et un nombre prescrit de lignes dans lesquelles un nombre desdits deuxièmes pixels étant continus dépasse ladite première valeur de seuil forment un bloc de lignes adjacentes (OUI à S57), dans lequel lorsque ledit moyen de comparaison de valeur maximale détermine que ladite valeur maximale du nombre desdits premiers pixels étant continus est supérieure à ladite valeur maximale du nombre desdits deuxièmes pixels étant continus, il est déterminé qu'une image inversée est formée.

**14.** Dispositif de traitement d'image selon la revendication 9, dans lequel un histogramme est créé (S54) en comptant un nombre desdits premiers pixels ou desdits deuxièmes pixels compris dans ladite région de détermination étant continus dans la direction de ligne, et dans lequel ledit moyen de détermination comprend un moyen de comparaison (S56A, 57A, 58A) pour comparer chacun d'un premier rapport entre un nombre desdits premiers pixels étant continus et un nombre de pixels agencés dans la direction de ligne de ladite région de détermination et un deuxième rapport entre un nombre desdits deuxièmes pixels étant continus et un nombre de pixels agencés dans la direction de ligne de ladite région de détermination à une deuxième valeur de seuil.

**15.** Dispositif de traitement d'image selon la revendication 14, dans lequel ledit moyen de détermination détermine qu'une image inversée est formée lorsqu'un nombre prescrit de lignes dans lesquelles ledit premier rapport dépasse ladite deuxième valeur de seuil forment un bloc de lignes adjacentes (OUI à S56A) et un nombre prescrit de lignes dans lesquelles ledit deuxième rapport dépasse ladite deuxième valeur de seuil ne forment pas un bloc de lignes adjacentes (NON à S57A).

**16.** Dispositif de traitement d'image selon la revendication 15,
ledit moyen de détermination comprenant un moyen de comparaison de valeur maximale (S61) pour effectuer une comparaison entre une valeur maximale d'un nombre desdits premiers pixels étant continus et une valeur maximale d'un nombre desdits deuxièmes pixels étant continus lorsqu'un nombre prescrit de lignes dans lesquelles ledit premier rapport dépasse ladite deuxième valeur de seuil forment un bloc de lignes adjacentes (OUI à S56A) et un nombre prescrit de lignes dans lesquelles ledit deuxième rapport dépasse ladite deuxième valeur de seuil forment un bloc de lignes adjacentes (OUI à S57A), dans lequel lorsque ledit moyen de comparaison de valeur maximale détermine que ladite valeur maximale du nombre desdits premiers pixels étant continus est supérieure à ladite valeur maximale du nombre desdits deuxièmes pixels étant continus, il est déterminé qu'une image inversée est formée.

**17.** Dispositif de traitement d'image selon la revendication 13 ou 16,
ledit moyen de détermination comprenant en outre un moyen de comparaison de nombre total (S65) pour effectuer une comparaison entre un nombre total desdits premiers pixels et un nombre total desdits deuxièmes pixels lorsque ledit moyen de comparaison de valeur maximale détermine que ladite valeur maximale du nombre desdits premiers pixels étant continus est égale à ladite valeur maximale du nombre desdits deuxièmes pixels étant continus (= à S61), dans lequel lorsqu'il est déterminé que ledit nombre total desdits premiers pixels est supérieur audit nombre total desdits deuxièmes pixels, ledit moyen de comparaison de nombre total détermine qu'une image inversée est formée.

**18.** Dispositif de traitement d'image selon la revendication 9 ou 10,
ledit moyen d'extraction de région de détermination comprenant un moyen d'extraction de région de caractère (S01) pour extraire une région de caractère dans laquelle un caractère est représenté à partir de ladite image entrée, dans lequel

une région rectangulaire comprenant au moins une partie de ladite région de caractère extraite est extraite en tant que région de détermination (S02).

**19.** Dispositif de traitement d'image selon la revendication 18,

ledit moyen d'extraction de région de caractère comprenant

un moyen d'extraction de région de texte (S101) pour extraire une région de texte dans laquelle un caractère est représenté à partir de ladite image entrée, et

un moyen d'extraction de région de réseau de caractères (S102) pour extraire une région de réseau de caractères dans laquelle une pluralité de caractères sont agencés à partir de ladite région de texte extraite, dans lequel

une région de caractère comprenant au moins un caractère est extraite de ladite région de réseau de caractères extraite (S103).

**20.** Dispositif de traitement d'image selon la revendication 18,

ledit moyen d'extraction de région de détermination comprenant :

un moyen de création d'histogramme (S04) pour créer un histogramme de pixels de bord comptés dans une direction de côté long de ladite région de caractère,

un moyen de balayage (S26-S29) pour balayer des lignes depuis un milieu jusqu'à chacune de deux parties d'extrémité dans la direction orthogonale à la ligne parallèle à une direction de côté long de ladite région de caractère,

un moyen de comparaison (S07, S11) pour comparer un nombre de pixels de bord compris dans ladite région de caractère à une troisième valeur de seuil ou à une quatrième valeur de seuil pour chaque ligne, et

un moyen de décision de région de détermination (S12) pour décider si une région spécifiée par une ligne dans laquelle un nombre de pixels de bord est supérieur à ladite quatrième valeur de seuil est une région de détermination, après qu'un nombre prescrit de lignes dans lesquelles un nombre de pixels de bord est inférieur ou égal à ladite troisième valeur de seuil sont continues (OUI à S10), lorsqu'une ligne dans laquelle un nombre de pixels de bord est supérieur ou égal à ladite quatrième valeur de seuil est détectée (OUI à S11).

**21.** Dispositif de traitement d'image selon la revendication 18,

ledit moyen d'extraction de région de détermination comprenant :

un moyen de création d'histogramme (S24) pour créer un histogramme desdits premiers pixels étant continus dans une direction de côté long de ladite région de caractère,

un moyen de balayage (S26-S29) pour balayer des lignes depuis un milieu jusqu'à chacune de deux parties d'extrémité dans la direction orthogonale à la ligne parallèle à une direction de côté long de ladite région de caractère,

un moyen de comparaison (S27, S31) pour comparer un nombre desdits premiers pixels compris dans ladite région de caractère étant continus à une cinquième valeur de seuil ou à une sixième valeur de seuil pour chaque ligne, et

un moyen de décision de région de détermination (S32) pour décider si une région spécifiée par une ligne dans laquelle un nombre desdits premiers pixels étant continus est inférieur à ladite sixième valeur de seuil est une région de détermination, après qu'un nombre prescrit de lignes dans lesquelles un nombre desdits premiers pixels étant continus est supérieur ou égal à ladite cinquième valeur de seuil sont continues (OUI à S30), lorsqu'une ligne dans laquelle un nombre desdits premiers pixels étant continus est inférieur à ladite sixième valeur de seuil est détectée (OUI à S31).

**22.** Dispositif de traitement d'image selon la revendication 20 ou 21, dans lequel ledit moyen de décision de région de détermination décide si une région prise en sandwich entre deux lignes droites arbitraires orthogonales à une direction de ligne (S13, S33) est une région de détermination.

**23.** Support d'enregistrement lisible par ordinateur ayant un programme de traitement d'image enregistré sur celui-ci pour effectuer une détermination d'image inversée sur une région de détermination en amenant un ordinateur à exécuter :

une étape d'extraction de région de détermination (S104) pour définir une région partielle d'une taille prescrite pour des informations d'image sur la base d'une taille desdites informations d'image et extraire ladite région de détermination sur la base de ladite région partielle ; et

une étape de détermination d'image inversée (S105) pour déterminer si la région de détermination extraite à ladite étape d'extraction de région de détermination possède une image dans laquelle un caractère comportant un niveau de gris supérieur à au moins celui d'un arrière-plan est tracé ou une image dans laquelle un caractère comportant un niveau de gris inférieur à au moins celui d'un arrière-plan est tracé, sur la base de longueurs de passage respectant des conditions prescrites, lesdites longueurs de passage étant des longueurs de pixels d'un même niveau de gris étant continus, qui sont obtenues en mesurant lesdites informations d'image dans une direction de ligne,

**caractérisé en ce que** ladite étape de détermination d'image inversée mesure une longueur de passage le long de la direction de ligne desdites informations d'image prescrites et détermine si une image inversée est formée ou pas selon que les lignes contenant les longueurs de passage respectant la condition de longueur minimale forment ou pas un bloc de lignes adjacentes,

l'ordinateur exécutant en outre :

une étape de binarisation (S52) pour classer une valeur de pixel d'un pixel compris dans ladite région de détermination dans l'un d'un premier pixel et d'un deuxième pixel ;

l'étape de détermination d'image inversée étant en outre destinée à :

déterminer un nombre maximal de premiers pixels étant continus dans ladite direction de ligne et un nombre maximal de deuxièmes pixels étant continus dans ladite direction de ligne (S53) ;

comparer ledit nombre maximal desdits premiers pixels et ledit nombre maximal desdits deuxièmes pixels à un seuil ; et

balayer dans la direction orthogonale à la direction de ligne pour déterminer si les conditions que ledit nombre maximal desdits premiers pixels soit supérieur audit seuil (556) et ledit nombre maximal desdits deuxièmes pixels soit supérieur audit seuil (557) sont respectées pour un certain nombre de lignes adjacentes.

**24.** Procédé de traitement d'image comprenant :

un moyen d'extraction de région de détermination (S104) pour définir une région partielle d'une taille prescrite pour des informations d'image sur la base d'une taille desdites informations d'image et extraire une région de détermination sur la base de ladite région partielle ; et

un moyen de détermination d'image inversée (S105) pour déterminer si ladite région de détermination extraite par ledit moyen d'extraction de région de détermination possède une image dans laquelle un caractère comportant un niveau de gris supérieur à au moins celui d'un arrière-plan est tracé ou une image dans laquelle un caractère comportant un niveau de gris inférieur à au moins celui d'un arrière-plan est tracé, sur la base de longueurs de passage respectant des conditions prescrites, lesdites longueurs de passage étant des longueurs de pixels d'un même niveau de gris étant continus, qui sont obtenues en mesurant lesdites informations d'image dans une direction de ligne, dans lequel

ladite détermination d'image inversée est effectuée sur ladite région de détermination,

**caractérisé en ce que** ledit moyen de détermination d'image inversée mesure une longueur de passage le long de la direction de ligne desdites informations d'image prescrites et détermine si une image inversée est formée ou pas selon que les lignes contenant les longueurs de passage respectant la condition de longueur minimale forment ou pas un bloc de lignes adjacentes,

le procédé comprenant en outre :

un moyen de binarisation (S52) pour classer une valeur de pixel d'un pixel compris dans ladite région de détermination dans l'un d'un premier pixel et d'un deuxième pixel ;

le moyen de détermination d'image inversée étant destiné à :

déterminer un nombre maximal de premiers pixels étant continus dans ladite direction de ligne et un nombre maximal de deuxièmes pixels étant continus dans ladite direction de ligne (SS3) ;

comparer ledit nombre maximal desdits premiers pixels et ledit nombre maximal desdits deuxièmes pixels à un seuil ; et

balayer dans la direction orthogonale à la direction de ligne pour déterminer si les conditions que ledit nombre maximal desdits premiers pixels soit supérieur audit seuil (556) et ledit nombre maximal desdits deuxièmes pixels soit supérieur audit seuil (557) sont respectées pour un certain nombre de lignes adjacentes.

**25.** Programme de traitement d'image pour effectuer une détermination d'image inversée sur une région de détermination en amenant un ordinateur à exécuter :

une étape d'extraction de région de détermination (S104) pour définir une région partielle d'une taille prescrite pour des informations d'image sur la base d'une taille desdites informations d'image et extraire ladite région de détermination sur la base de ladite région partielle ; et

une étape de détermination d'image inversée (S105) pour déterminer si ladite région de détermination extraite à ladite étape d'extraction de région de détermination possède une image dans laquelle un caractère comportant un niveau de gris supérieur à au moins celui d'un arrière-plan est tracé ou une image dans laquelle un caractère comportant un niveau de gris inférieur à au moins celui d'un arrière-plan est tracé, sur la base de longueurs de passage respectant des conditions prescrites, lesdites longueurs de passage étant des longueurs de pixels d'un même niveau de gris étant continus, qui sont obtenues en mesurant lesdites informations d'image dans une direction de ligne,

**caractérisé en ce que** ladite étape de détermination d'image inversée mesure une longueur de passage le long de la direction de ligne desdites informations d'image prescrites et détermine si une image inversée est formée ou pas selon que les lignes contenant les longueurs de passage respectant la condition de longueur minimale forment ou pas un bloc de lignes adjacentes,

l'ordinateur exécutant en outre :

une étape de binarisation (S52) pour classer une valeur de pixel d'un pixel compris dans ladite région de détermination dans l'un d'un premier pixel et d'un deuxième pixel ;

l'étape de détermination d'image inversée étant en outre destinée à :

déterminer un nombre maximal de premiers pixels étant continus dans ladite direction de ligne et un nombre maximal de deuxièmes pixels étant continus dans ladite direction de ligne (SS3) ;

comparer ledit nombre maximal desdits premiers pixels et ledit nombre maximal desdits deuxièmes pixels à un seuil ; et

balayer dans la direction orthogonale à la direction de ligne pour déterminer si les conditions que ledit nombre maximal desdits premiers pixels soit supérieur audit seuil (556) et ledit nombre maximal desdits deuxièmes pixels soit supérieur audit seuil (557) sont respectées pour un certain nombre de lignes adjacentes.

FIG.1

FIG.2

TEXT REGION
EXTRACTION
UNIT
4

ROW REGION
EXTRACTION
UNIT
5

CHARACTER
REGION
EXTRACTION
UNIT
6

CHARACTER
MATCHING
UNIT
10

12

TEMPORARY
STORAGE
UNIT
3

CONTROL
UNIT
2

FIG.3

```
                    ( START )
                        │
                        ▼
        ┌──────────────────────────────────┐  S101
        │   TEXT REGION EXTRACTION PROCESS  │
        └──────────────────────────────────┘
                        │
                        ▼
        ┌──────────────────────────────────┐  S102
        │   ROW REGION EXTRACTION PROCESS   │
        └──────────────────────────────────┘
                        │
                        ▼
        ┌──────────────────────────────────┐  S103
        │ CHARACTER REGION EXTRACTION PROCESS│
        └──────────────────────────────────┘
                        │
                        ▼
        ┌──────────────────────────────────┐  S104
        │DETERMINATION REGION EXTRACTION PROCESS│
        └──────────────────────────────────┘
                        │
                        ▼
        ┌──────────────────────────────────┐  S105
        │ REVERSED IMAGE DETERMINATION PROCESS│
        └──────────────────────────────────┘
                        │
                        ▼
        ┌──────────────────────────────────┐  S106
        │       IMAGE REVERSAL PROCESS      │
        └──────────────────────────────────┘
                        │
                        ▼
        ┌──────────────────────────────────┐  S107
        │   CHARACER SEGMENTATION PROCESS   │
        └──────────────────────────────────┘
                        │
                        ▼
        ┌──────────────────────────────────┐  S108
        │     CHARACTER PATTERN MATCHING    │
        └──────────────────────────────────┘
                        │
                        ▼
                    (  END  )
```

FIG.4

一部の文字が反転している状態————

所定領域より小さい。反転文字————

## FIG.5

一部の文字が 反転 している状態 - - - - - 61

所定領域より小さい。反転文字 - - - - 62

Hth

## FIG.6

Bi  Bi+1                    Bi+2

Cj        Cj+1              Cj+2

が反転し

NUMBER
OF
PIXELS

PNth

CHARACTER →
STRING
DIRECTION

FIG.7A

33

20

63

Email ABCD@efg. co | LH

FIG.7B

21

20

LH

Email

RL

FIG.8A

21A

H1

RH

H2

RW

FIG.8B

0 Eth1

RW(=Eth2)

HISTOGRAM OF NUMBER
OF EFFECTIVE EDGES

FIG.9

DETERMINATION REGION
EXTRACTION PROCESS 1

OBTAIN CHARACTER REGION $\quad$ S01

SET PARTIAL REGION $\quad$ S02

CALCULATE EDGE VALUE $\quad$ S03

COUNT EDGE PIXELS IN X AXIS
DIRECTION TO CREATE HISTOGRAM Ei $\quad$ S04

i = MIDDLE LINE $\quad$ S05

i = i+1 or i = i−1 $\quad$ S06

S07

$E_i < E_{th1}$ ? — NO

YES

$j = j+1$ $\quad$ S08

$j > C1$ ? $\quad$ S10 — NO

YES

$E_i \geqq E_{th2}$ ? $\quad$ S11 — NO

YES

DECIDE LINE $\quad$ S12

NEXT LINE
EXISTS? $\quad$ S09 — YES

NO

DECIDE DETERMINATION REGION $\quad$ S13

RETURN

FIG.10A

FIG.10B

FIG.11A

FIG.11B

HISTOGRAM OF BLACK RUN

FIG.12

```
        ┌─────────────────────────┐
        │  DETERMINATION REGION   │
        │  EXTRACTION PROCESS 2   │
        └─────────────────────────┘
                    ↓
        ┌─────────────────────────┐
        │ OBTAIN CHARACTER REGION │  S21
        └─────────────────────────┘
                    ↓
        ┌─────────────────────────┐
        │    SET PARTIAL REGION   │  S22
        └─────────────────────────┘
                    ↓
        ┌─────────────────────────┐
        │        BINARIZE         │  S23
        └─────────────────────────┘
                    ↓
        ┌─────────────────────────┐
        │ CREATE HISTOGRAM OF BLACK│  S24
        │ RUN BRi IN X AXIS DIRECTION│
        └─────────────────────────┘
                    ↓
        ┌─────────────────────────┐
        │     i = MIDDLE LINE     │  S25
        └─────────────────────────┘
                    ↓
        ┌─────────────────────────┐
        │   i = i+1 or i = i−1    │  S26
        └─────────────────────────┘
                    ↓
                   S27        NO
             ◇ BRi≧BRth ? ───────────────┐
                    │ YES                 │
              ┌──────────┐                ↓
              │  j = j+1 │  S28      NO  ◇ j>C3 ?  S30
              └──────────┘          ┌─────      │ YES
                    │               │           ↓         S31
                    │               │ NO   ◇ BRi<BRth ?
                    │               └──────      │ YES
              YES  ◇ NEXT LINE  S29        ┌──────────────┐
             ┌──── │  EXISTS?              │ DECIDE LINE  │ S32
             │      NO │                   └──────────────┘
             │         ↓                          │
        ┌─────────────────────────────┐           │
        │ EXTRACT DETERMINATION REGION│  S33 ←─────┘
        └─────────────────────────────┘
                    ↓
              ┌───────────┐
              │  RETURN   │
              └───────────┘
```

FIG.13

```
        ┌─────────────────────────┐
        │   REVERSED IMAGE        │
        │ DETERMINATION PROCESS 1 │
        └─────────────────────────┘
                     │
                     ▼
        ┌─────────────────────────┐
        │ OBTAIN DETERMINATION REGION │  S51
        └─────────────────────────┘
                     │
                     ▼
        ┌─────────────────────────┐
        │        BINARIZE         │  S52
        └─────────────────────────┘
                     │
                     ▼
        ┌─────────────────────────┐
        │    BRLi = MAX(BRk)      │  S53
        │    WRLi = MAX(BRl)      │
        └─────────────────────────┘
                     │
                     ▼
        ┌─────────────────────────┐
        │    CREATE HISTOGRAM     │  S54
        └─────────────────────────┘
                     │
                     ▼
        ┌─────────────────────────┐
        │     SCAN HISTOGRAM      │  S55
        └─────────────────────────┘
                     │
                     ▼
```

S56

BRLi > RLth CONTINUES? — NO

S58 WRLi > RLth CONTINUES?

YES

S57 WRLi > RLth CONTINUES?

NO — S59 WHITE AS BACKGROUND COLOR — (A)

S60 BLACK AS BACKGROUND COLOR — (A)

YES

S61 COMPARE MAX(BRLi) WITH MAX(WRLi)

< S62 WHITE AS BACKGROUND COLOR

> S63 BLACK AS BACKGROUND COLOR — (A)

= S64 TBR = TOTAL SUM OF BLACK PIXELS TWR = TOTAL SUM OF WHITE PIXELS

S65 TBR−TWR ≧ TRLth ?

NO

YES S66 BLACK AS BACKGROUND COLOR — (A)

S67 WHITE AS BACKGROUND COLOR — (A)

S68 BACKGROUND COLOR IS BLACK?

NO — S70 NON-REVERSED IMAGE

YES — S69 REVERSED IMAGE

RETURN

39

EP 1 619 605 B1

FIG.14B

FIG.14A

RH/2 –
0 –
–RH/2 –

BLACK RUN

23
22

RH

Email

RL

RL

FIG.14C

RH/2 –
0 –
–RH/2 –

WHITE RUN

RL

## FIG.15

REVERSED IMAGE
DETERMINATION PROCESS 2

OBTAIN DETERMINATION REGION | S51

BINARIZE | S52

BRLi = MAX(BRk)
WRLi = MAX(BRl) | S53

CREATE HISTOGRAM | S54

SCAN HISTOGRAM | S55

S56A
BRLi/RL>Rth
CONTINUES? —— NO

YES

S57A
WRLi/RL>Rth
CONTINUES? —— NO

NO

S58A
WRLi/RL>Rth
CONTINUES?

YES

S60
BLACK AS
BACKGROUND COLOR

YES

WHITE AS
BACKGROUND COLOR | S59

(A)

(A)

S61
COMPARE
MAX(BRLi) WITH
MAX(WRLi)

<

=

S62
WHITE AS
BACKGROUND COLOR

>

S63
BLACK AS
BACKGROUND COLOR

TBR = TOTAL SUM OF
BLACK PIXELS
TWR = TOTAL SUM OF
WHITE PIXELS | S64

(A)

S65
TBR−TWR
≧TRLth ? —— NO

YES

S68
BACKGROUND
COLOR IS BLACK?

NO

S66
BLACK AS
BACKGROUND COLOR

S70
NON-REVERSED
IMAGE

YES

(A)

S67
WHITE AS
BACKGROUND COLOR

REVERSED IMAGE | S69

(A)

RETURN

FIG.16

```
        ┌─────────────────────────────┐
        │    REVERSED IMAGE           │
        │  DETERMINATION PROCESS 3    │
        └─────────────────────────────┘
                     │
                     ▼
     ┌─────────────────────────────────┐  S81
     │  OBTAIN DETERMINATION REGION    │
     └─────────────────────────────────┘
                     │
                     ▼
     ┌─────────────────────────────────┐  S82
     │           BINARIZE              │
     └─────────────────────────────────┘
                     │
                     ▼
     ┌─────────────────────────────────┐  S83
     │ BP = TOTAL SUM OF BLACK PIXELS  │
     │ WP = TOTAL SUM OF WHITE PIXELS  │
     └─────────────────────────────────┘
                     │
                     ▼
                   S84
             ◇─────────────◇      NO
            <  WP-BP ≦ Pth1  >──────────────┐
             ◇─────────────◇                │
                   ?                        │
                   │ YES  S85               │  S86
                   ▼                        ▼
     ┌─────────────────────┐   ┌─────────────────────────┐
     │   REVERSED IMAGE    │   │   NON-REVERSED IMAGE    │
     └─────────────────────┘   └─────────────────────────┘
                   │                        │
                   ▼◄───────────────────────┘
            ┌──────────────┐
            │    RETURN    │
            └──────────────┘
```

FIG.17B

FIG.17A

RH/2

0

-RH/2

RL

NUMBER OF BLACK PIXELS

22

**Email**

RH

RL

FIG.17C

RH/2

0

-RH/2

RL

NUMBER OF WHITE PIXELS

EP 1 619 605 B1

# FIG.18

```
        ┌─────────────────────────────┐
        │      REVERSED IMAGE         │
        │ DETERMINATION PROCESS 4     │
        └─────────────────────────────┘
                      │
                      ▼
        ┌─────────────────────────────┐  S81
        │ OBTAIN DETERMINATION REGION │
        └─────────────────────────────┘
                      │
                      ▼
        ┌─────────────────────────────┐  S82
        │          BINARIZE           │
        └─────────────────────────────┘
                      │
                      ▼
        ┌─────────────────────────────┐  S83
        │ BP = TOTAL SUM OF BLACK PIXELS│
        │ WP = TOTAL SUM OF WHITE PIXELS│
        └─────────────────────────────┘
                      │
                      ▼           S84A
              ◇─────────────◇      NO
              │ BP/WP > Pth2 │──────────────┐
              ◇─────────────◇               │
                     │                       │
                 YES │  S85                  │  S86
                     ▼                       ▼
        ┌─────────────────────┐   ┌─────────────────────┐
        │   REVERSED IMAGE    │   │  NON-REVERSED IMAGE │
        └─────────────────────┘   └─────────────────────┘
                     │                       │
                     ▼◄──────────────────────┘
              ┌──────────────┐
              │    RETURN     │
              └──────────────┘
```

FIG.19

一部の文字が反転している状態
所定領域より小さい。反転文字

FIG.20

一部の文字が反転している状態
所定領域より小さい。反転文字

FIG.21

08

FIG.22

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 5778103 A
- JP 1279385 A
- WO 2743378 A
- JP 5182022 A